# EUROPÄISCHE PATENTSCHRIFT

(11) **EP 2 777 125 B1**
(45) Veröffentlichungstag und Bekanntmachung des Hinweises auf die Patenterteilung: **04.07.2018**
(21) Anmeldenummer: 12781077.8
(22) Anmeldetag: 29.10.2012
(51) Int. Cl.: H02J 3/32, H02J 7/34, H02J 3/24

(54) **VERFAHREN ZUR BEREITSTELLUNG VON REGELLEISTUNG MIT EINEM ENERGIESPEICHER MIT VARIABLER TOTBANDBREITE BEI DER REGELLEISTUNGSERBRINGUNG**
METHOD FOR PROVIDING CONTROL POWER USING AN ENERGY STORE HAVING VARIABLE DEADBAND WIDTH WHEN PROVIDING THE CONTROL POWER
PROCEDE POUR FOURNIR UNE PUISSANCE DE RÉGULATION AU MOYEN D'UN ACCUMULATEUR D'ÉNERGIE À LARGEUR DE BANDE MORTE VARIABLE LORS DE LA FOURNITURE DE LA PUISSANCE

(30) Priorität: 10.11.2011 DE 102011055232
(43) Veröffentlichungstag der Anmeldung: 17.09.2014
(73) Patentinhaber: Evonik Degussa GmbH, 45128 Essen (DE); STEAG Power Saar GmbH, 66111 Saarbrücken (DE)
(72) Erfinder: MARKOWZ, Georg, 63755 Alzenau (DE); SCHWEISSTHAL, Wolfgang, 66399 Mandelbachtal (DE); KOLLIGS, Carsten, 46244 Bottrop (DE); BREZSKI, Holger, 35463 Fernwald (DE); FLEMMING, Anna, 60598 Frankfurt (DE); GAMRAD, Dennis, 46562 Voerde (DE); COCHET, Sébastian, 40885 Ratingen (DE)
(86) Internationale Anmeldenummer: PCT/EP2012/071374
(87) Internationale Veröffentlichungsnummer: WO 2013/068264

(56) Entgegenhaltungen:
- EP-A2- 2 200 149
- WO-A1-2007/104167
- US-A1- 2011 245 987

## Beschreibung

Die Erfindung betrifft ein Verfahren zur Bereitstellung von Regelleistung für ein Stromnetz, bei dem zumindest ein an das Stromnetz angeschlossener Energiespeicher in Abhängigkeit von einer Frequenzabweichung von einer Sollfrequenz des Stromnetzes dem Stromnetz Energie zuführt und/oder aus dem Stromnetz Energie aufnimmt; sowie eine Vorrichtung zum Durchführen eines solchen Verfahrens.

Stromnetze werden verwendet, um Strom von meist mehreren Energieerzeugern in großen Gebieten auf viele Nutzer zu verteilen und Haushalte und Industrie mit Energie zu versorgen. Energieerzeuger meist in Form von Kraftwerken stellen dazu die benötigte Energie bereit. In der Regel wird die Stromerzeugung auf den prognostizierten Verbrauch hin geplant und bereitgestellt.

Sowohl beim Erzeugen als auch dem Verbrauchen von Energie kann es jedoch zu ungeplanten Schwankungen kommen. Diese können auf der Energieerzeugerseite beispielsweise dadurch entstehen, dass ein Kraftwerk oder ein Teil des Stromnetzes ausfällt oder zum Beispiel im Fall erneuerbarer Energien wie Wind, dass die Energieerzeugung höher ausfällt als prognostiziert. Auch bezüglich der Verbraucher kann es zu unerwartet hohen oder niedrigen Verbräuchen kommen. Der Ausfall eines Teils des Stromnetzes beispielsweise, der einige Verbraucher von der Energieversorgung abschneidet, kann zu einer plötzlichen Reduzierung des Stromverbrauchs führen.

Dies führt im Allgemeinen dazu, dass es in Stromnetzen durch ungeplante und/oder kurzfristige Abweichungen von Leistungserzeugung und/oder -verbrauch zu Schwankungen der Netzfrequenz kommt. Die gewünschte Wechselstromfrequenz beträgt beispielsweise in Europa 50,000 Hz. Solche gewünschten Wechselstromfrequenzen werden auch als Sollfrequenzen bezeichnet. Eine Verringerung des Verbrauchs gegenüber dem Plan führt zu einer Erhöhung der Netzfrequenz bei planmäßig erzeugter Leistung durch die Energieerzeuger, gleiches gilt für eine Erhöhung der Stromproduktion gegenüber dem Plan bei planmäßigem Verbrauch. Eine Verringerung der Leistung der Energieerzeuger führt dagegen zu einer Verringerung der Netzfrequenz bei planmäßigem Verbrauch, gleiches gilt für eine Erhöhung des Verbrauchs gegenüber dem Plan bei plangemäßer Erzeugung.

Aus Gründen der Netzstabilität ist es erforderlich, diese Abweichungen in einem definierten Rahmen zu halten. Dazu muss je nach Höhe und Richtung der Abweichung gezielt positive Regelleistung durch Zuschalten von zusätzlichen Erzeugern oder Abschalten von Verbrauchern oder negative Regelleistung durch Abschalten von Erzeugern oder Hinzuschalten von Verbrauchern bereitgestellt werden. Es besteht allgemein der Bedarf an einer wirtschaftlichen und effizienten Bereitstellung dieser Regelleistungen, wobei die Anforderungen an die bereitzuhaltenden Kapazitäten und die Dynamik der Regelleistungsquellen beziehungsweise -senken je nach Charakteristik des Stromnetzes variieren können.

In Europa gibt es beispielsweise ein Regelwerk ("UCTE Handbook"), das drei verschiedene Kategorien an Regelleistung beschreibt. Darin sind auch die jeweiligen Anforderungen an die Regelleistungsarten festgelegt. Die Regelleistungsarten unterscheiden sich unter anderem in den Anforderungen an die Dynamik und die Dauer der Leistungserbringung. Außerdem werden sie unterschiedlich hinsichtlich der Randbedingungen eingesetzt. Primärregelleistung (PRL) ist unabhängig vom Ort der Verursachung der Störung europaweit von allen eingebundenen Quellen zu erbringen und zwar im Wesentlichen proportional zur aktuellen Frequenzabweichung. Die absolut maximale Leistung ist bei Frequenzabweichungen von minus 200 mHz und (absolut) darunter zu erbringen, die absolut minimale Leistung ist bei Frequenzabweichungen von plus 200 mHz und darüber zu erbringen. Hinsichtlich der Dynamik gilt, dass aus dem Ruhezustand die jeweils (betragsmäßig) maximale Leistung innerhalb von 30 Sekunden bereitgestellt werden muss. Demgegenüber sind Sekundärregelleistung (SRL) und Minutenreserveleistung (MR) in den Bilanzräumen zu erbringen, in denen die Störung aufgetreten ist. Ihre Aufgabe ist es, die Störung möglichst schnell zu kompensieren und somit dafür zu sorgen, dass die Netzfrequenz wieder möglichst schnell, vorzugsweise spätestens nach 15 Minuten wieder im Sollbereich liegt. Hinsichtlich der Dynamik werden an die SRL und die MRL geringere Anforderungen gestellt (5 beziehungsweise 15 Minuten bis zur vollen Leistungserbringung nach Aktivierung), gleichzeitig sind diese Leistungen auch über längere Zeiträume bereitzustellen als Primärregelleistung.

In den bisher betriebenen Stromnetzen wird ein Großteil der Regelleistung von konventionellen Kraftwerken, insbesondere Kohle- und Atomkraftwerken bereitgestellt. Zwei grundsätzliche Problemstellungen resultieren hieraus. Zum einen werden die konventionellen, Regelleistung bereitstellenden Kraftwerke nicht bei Volllast und damit maximalen Wirkungsgraden, sondern leicht unterhalb derselben betrieben, um bei Bedarf positive Regelleistung bereitstellen zu können, gegebenenfalls über einen theoretisch unbegrenzten Zeitraum. Zum anderen sind mit zunehmendem Ausbau und zunehmender bevorzugter Nutzung der erneuerbaren Energien immer weniger konventionelle Kraftwerke in Betrieb, was aber oftmals die Grundvoraussetzung für die Erbringung von Regelleistungen ist.

Aus diesem Grund wurden Ansätze entwickelt, vermehrt Energiespeicher einzusetzen, um negative Regelleistung zu speichern und bei Bedarf als positive Regelleistung bereitzustellen.

Der Einsatz von Hydro-Pumpspeicherwerken zur Erbringung von Regelleistung ist Stand der Technik. In Europa werden die verschiedenen Regelleistungsarten von Pumpspeichern erbracht. Hydropumpspeicher werden jedoch auch immer wieder genannt als gegenwärtig wirtschaftlichste Technologie zur Ein- und Ausspeicherung von erneuerbaren Energien, um Energieangebot und -bedarf zeitlich besser aufeinander anpassen zu können. Das Potenzial zum Ausbau der Speicherkapazitäten - insbesondere in Norwegen - wird kontrovers diskutiert, da für die Nutzung beträchtliche Kapazitäten von Stromleitungen genehmigt und installiert werden müssen. Folglich steht die Nutzung für das energiewirtschaftliche Lastmanagement in Konkurrenz zur Bereitstellung von Regelleistung.

Vor diesem Hintergrund wurden im Bereich der Primärregelleistung in der jüngeren Vergangenheit immer wieder Ansätze untersucht und beschrieben, auch andere Energiespeichertechnologien wie beispielsweise Schwungmassen- und Batteriespeicher für die Bereitstellung von Regelleistung einzusetzen.

Aus der US 2006/122738 A1 ist ein Energiemanagementsystem bekannt, dass einen Energieerzeuger und einen Energiespeicher umfasst, wobei der Energiespeicher durch den Energieerzeuger aufladbar ist. Dadurch soll ein Energieerzeuger, der im normalen Betrieb keine gleichmäßige Energieerzeugung gewährleistet, wie zum Beispiel die zunehmend favorisierten erneuerbaren Energien, wie Windkraft- oder Photovoltaikkraftwerke, in die Lage versetzt werden, ihre Energie gleichmäßiger ins Stromnetz abzugeben. Nachteilig ist hieran, dass hierdurch zwar ein einzelnes Kraftwerk stabilisiert werden kann, alle anderen Störungen und Schwankungen des Stromnetzes aber nicht oder nur sehr begrenzt abgefangen werden können.

Es ist aus der WO 2010042 190 A2 und der JP 2008 178 215 A bekannt, Energiespeicher zur Bereitstellung von positiver und negativer Regelleistung zu verwenden. Wenn die Netzfrequenz einen Bereich um die gewünschte Netzfrequenz verlässt, wird entweder Energie aus dem Energiespeicher bereitgestellt oder in den Energiespeicher aufgenommen, um die Netzfrequenz zu regulieren. Auch die DE 10 2008 046 747 A1 schlägt vor, einen Energiespeicher in einem Inselstromnetz derart zu betreiben, dass der Energiespeicher zur Kompensation von Verbrauchsspitzen und Verbrauchsminima eingesetzt wird. Nachteilig ist hieran, dass die Energiespeicher nicht die notwendige Kapazität haben, um eine längere Störung oder mehrere, hinsichtlich der Frequenzabweichung gleichgerichtete Störungen hintereinander zu kompensieren.

In dem Artikel "Optimizing a Battery Energy Storage System for Primary Frequency Control" von Oudalov et al., in IEEE Transactions on Power Systems, Vol. 22, No. 3, August 2007, wird die Kapazität eines Akkumulators in Abhängigkeit von technischen und betrieblichen Randbedingungen bestimmt, damit dieser nach den europäischen Normen ("UCTE Handbook") Primärregelleistung bereitstellen kann. Es zeigt sich, dass auf Grund der Ein- und Ausspeicherverluste langfristig immer wieder ein Aufladen des Energiespeichers in größeren Zeitabständen unvermeidbar ist. Trotzdem kann es kurzfristig beziehungsweise vorübergehend dazu kommen, dass der Energiespeicher überladen wird. In dem Artikel wird ein (begrenzter Einsatz) von Widerständen vorgeschlagen. Dies führt jedoch zu einer Energievernichtung und in der Regel einer Entwertung der Energie. Trotz dieser Maßnahme ist der Energiespeicher mit einer Volllast-Laufzeit von 1,6 Stunden immer noch vergleichsweise groß dimensioniert, jedenfalls deutlich größer als es den Minimalanforderungen des "UCTE Handbooks" entspricht. Die vergleichsweise hohen Kapazitäten sind mit entsprechenden Investitionskosten verbunden und machen den Einsatz von Energiespeichern oftmals unwirtschaftlich.

Akkumulatoren und andere Energiespeicher können sehr schnell Energie aufnehmen oder abgeben, wodurch sie sich grundsätzlich zur Bereitstellung von PRL eignen. Nachteilig ist jedoch hieran, dass sehr große Kapazitäten der Akkumulatoren bereitgestellt werden müssen, um die Regelleistung auch über einen längeren Zeitraum oder wiederholt liefern zu können. Akkumulatoren mit sehr großer Kapazität sind aber auch sehr teuer.

Auf Grund der Verluste beim Ein- und Ausspeichern von Energie erfolgt bei statistisch symmetrischer Abweichung der Netzfrequenzen vom Sollwert durch den Betrieb früher oder später eine Entleerung des Energiespeichers, wie zum Beispiel eines Akkumulators. Es ist daher erforderlich, den Energiespeicher mehr oder weniger regelmäßig gezielt aufzuladen. Eventuell muss dieser Ladestrom separat bezahlt werden.

Aus der US 7,839,027 B2 sowie der WO 2010 042 190 A2 ist ein gattungsgemäßes Verfahren zur Bereitstellung von Regelleistung mit einem Energiespeicher bekannt. Dabei wird in den Zeiten, in denen keine Regelleistung benötigt wird, also innerhalb eines Totbands um die Sollfrequenz der Netzfrequenz der Energiespeicher geladen oder entladen, um einen gewünschten Ausgangsladungszustand zu erzielen. Nachteilig ist hieran, dass die Leistung aus dem Netz bezogen werden muss, also bezahlt werden muss. Ferner ist nachteilig, dass, wenn viele Regelzyklen aufeinander folgen, der Energiespeicher noch immer stark geladen oder entladen wird. Es muss also immer noch eine große Kapazität (Energiespeicherkapazität) des Energiespeichers vorgehalten werden.

Weiterhin ist es aus US 2011/0245987 A1 bekannt einen gleitenden Frequenzmittelwert zu bilden. Abhängig von der Abweichung der augenblicklichen Frequenz von diesem Mittelwert wird ein Ent-/Ladesollwert für den Speicher festgelegt, der zwischen -100% bis +100% liegt und eine Frequenzstabilisierung bewirkt. Um den Ladezustand in eine bestimmte Richtung zu verschieben, wird dieser Wert gezielt geändert, dass Entladevorgänge bzw. Ladevorgänge überwiegen und so der Ladezustand sich einem gewünschten Sollwert annähert. Ein Laden innerhalb des Totbands unabhängig vom Frequenzwert der Netzfrequenz führt zu einer Beeinflussung der Netzfrequenz, wenn die bezogene oder abgegebene Energie nicht zeitgleich an anderer Stelle produziert oder aufgenommen wird. Unter ungünstigen Umständen führt dieser Vorgang dazu, dass sich die Netzfrequenz vom (idealen) Sollwert (der Sollfrequenz) entfernt und damit näher an die Grenze des Totbands herangeführt wird, ab der aus Gründen der Systemstabilität wieder allgemein Regelenergie bereitzustellen ist. Sollte der Bezug von Energie oder die Abgabe von Energie mit einem entsprechenden Handel der Form erfolgen, dass immer zeitgleich an anderer Stelle die aus dem Energiespeicher abzugebende Energie aufgenommen beziehungsweise die vom Energiespeicher aufzunehmende Energie produziert wird, so gibt es zwar keine Störung, aber auch keinen Grund, dies nur im Totband zu tun. Im Gegenteil, die Begrenzung auf das Totband beschränken die Möglichkeiten der Ladezustandsanpassung auf die Zeiten, in denen sich die Netzfrequenz in diesem Totband befindet. Dies führt tendenziell zu höheren

Energiespeicherkapazitäten, als wenn eine Anpassung des Ladezustands zu beliebigen Zeitpunkten erfolgen kann. Weiterhin ist nachteilig an dieser Verfahrensweise, dass diese Handelsvorgänge organisiert und abgewickelt werden müssen, was zu zusätzlichen Kosten und Einschränkungen führt (zum Beispiel bei der Suche von Handelspartnern).

Ein weiterer Nachteil des Stands der Technik ist darin zu sehen, dass zumindest zeitweise im Totband keine Regelleistung erbracht wird oder das Stromnetz sogar mit einer kontraproduktiven Leistung zur Anpassung des Ladezustands des Energiespeichers belastet wird.

Eine konsequente Einhaltung der Leitlinien zur Präqualifizierung von Primärregeltechnologien erfordert die Bereithaltung entsprechender Leistungsreserven zu jedem beliebigen Betriebszeitpunkt und damit Ladungszustand des Energiespeichers. Diese Anforderung (in Deutschland aktuell: die vermarktete Primärregelleistung über eine Dauer von 15 min) führt dazu, dass eine entsprechende, Investitionskosten erhöhende Kapazität vorgehalten werden muss. Tatsächlich würde eine solche Reserve (statistisch bedingt) nur sehr selten genutzt werden.

Es wurde im Rahmen der Erfindung gefunden, dass mitunter beträchtliche Energiemengen monoton ein- oder ausgespeist werden, wie eine Analyse von realen Frequenzverläufen der Erfinder zeigt. Dies führt bei gegebener Speicherkapazität zu entsprechend hoher Ladezustandsänderung. Große Ladezustandsänderungen wiederum führen tendenziell zu schnellerer Alterung als geringe Ladezustandsänderungen. Entweder erreicht der Energiespeicher somit eher sein Lebensende und muss eher ausgetauscht werden, oder die Kapazität ist à priori zu erhöhen, um die relative Ladezustandsänderung zu reduzieren. Beides führt zu einer Erhöhung der Investitionskosten.

Die Aufgabe der Erfindung besteht also darin, die Nachteile des Stands der Technik zu überwinden. In Anbetracht des Stands der Technik ist es nun insbesondere Aufgabe der vorliegenden Erfindung, ein technisch verbessertes Verfahren zur Bereitstellung von Regelleistung für ein Stromnetz, bei dem zumindest ein an das Stromnetz angeschlossener Energiespeicher dem Stromnetz nach Bedarf Energie zuführt und/oder aus dem Stromnetz nach Bedarf Energie aufnimmt, zur Verfügung zu stellen, das nicht mit den Nachteilen herkömmlicher Verfahren behaftet ist. Ferner soll eine Möglichkeit gefunden werden, die Wirtschaftlichkeit des Betriebs von Energiespeichern, wie Akkumulatoren, zur Primärregelleistungsbereitstellung durch Vermeidung von ineffizienten Ladezuständen zu verbessern. Dabei soll möglichst die Bereitstellung der Primärregelleistung mit geringerer Energiespeicher-Kapazität ermöglicht werden. Zudem wäre es auch vorteilhaft, wenn eine geringere Alterungsbelastung erreicht werden könnte. Ferner wäre auch die Bereitstellung der Primärregelleistung unter Vermeidung eines zwischenzeitlichen Ladens wünschenswert. Auch soll Regelleistung bei effizienter Energieausbeute des Regelleistungslieferanten bereitgestellt werden.

Eine weitere Aufgabe der Erfindung ist darin zu sehen, dass insbesondere bei einer Verwendung von galvanischen Elementen, wie Akkumulatoren, die Kapazität des Energiespeichers möglichst gering sein soll, um die erforderliche Regelleistung bereitzustellen.

Ferner ist es Aufgabenstellung der vorliegenden Erfindung ein Verfahren zu finden, bei dem die beschriebenen Störungen des Stromnetzes und gleichzeitig Handelsvorgänge vermieden oder reduziert werden. Weiterhin sollte das Verfahren möglichst einfach und kostengünstig durchgeführt werden können.

Auch wäre es wünschenswert, wenn auch im Totband eine konstruktive Regelleistung bereitgestellt würde, also auch im Totband zumindest zeitweise eine Regelung auf die Sollfrequenz hin erfolgen würde.

Darüber hinaus sollte das Verfahren mit möglichst wenigen Verfahrensschritten durchgeführt werden können, wobei dieselben einfach und reproduzierbar sein sollten.

Weitere nicht explizit genannte Aufgaben ergeben sich aus dem Gesamtzusammenhang der nach folgenden Beschreibung, Beispiele und Ansprüche.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1. Zweckmäßige Abwandlungen des erfindungsgemäßen Verfahren zur Bereitstellung von Regelleistung für ein Stromnetz, bei dem zumindest ein an das Stromnetz angeschlossener Energiespeicher dem Stromnetz nach Bedarf Energie zuführt und/oder aus dem Stromnetz nach Bedarf Energie aufnimmt, werden in den Unteransprüchen 2 bis 22 unter Schutz gestellt. Ferner hat Patentanspruch 23 eine Vorrichtung zum Durchführen eines solchen Verfahrens zum Gegenstand, während zweckmäßige Abwandlungen dieser Vorrichtung in den Unteransprüchen 24 bis 26 unter Schutz gestellt werden.

Die vorliegende Erfindung wird dementsprechend durch ein Verfahren zur Bereitstellung von Regelleistung für ein Stromnetz realisiert, bei dem zumindest ein an das Stromnetz angeschlossener Energiespeicher in Abhängigkeit von einer Frequenzabweichung von einer Sollfrequenz des Stromnetzes dem Stromnetz Energie zuführt und/oder aus dem Stromnetz Energie aufnimmt, wobei ein Totband um die Sollfrequenz vorgegeben wird, bei dem die Frequenzabweichung von der Netzfrequenz mit einer höheren Genauigkeit als der Breite des Totbands gemessen wird und eine Bandbreite innerhalb des Totbands in Abhängigkeit von einem Ladezustand des Energiespeichers gewählt wird, wobei außerhalb der Bandbreite Regelleistung bereitgestellt wird.

Das Totband um die Sollfrequenz der Netzfrequenz ist durch Grenzen der Frequenzabweichung von der Sollfrequenz definiert. Innerhalb des Totbands beziehungsweise innerhalb der Grenzen muss keine Regelleistung erbracht werden. Die Grenzen des Totbands werden vom Betreiber des Stromnetzes und/oder Behörden vorgegeben.

Neben der Frequenzabweichung von der Sollfrequenz der Netzfrequenz könnten auch andere Signale vom Netzbetreiber als Sollwert für die Erbringung von Regelleistung (alternativ auch für die Erbringung von Regulation, Operating Reserve etc.) verwendet werden. Die hier beschriebenen Verfahren, welche die vom Netzbetreiber zugestandenen Toleranzen, welche sich auf die Frequenzabweichung als Sollwert beziehen, ausnutzen um den Ladezustand eines Energiespeichers zu regeln, können auch in Systemen eingesetzt werden, in denen der Sollwert zur Erbringung von Regelleistung (z. B. Area Control Error, ACE) vom Netzbetreiber direkt an die Erbringer von Regelleistung versendet wird. Auch hierbei kann den Erbringern von Regelleistung ein Totband zugestanden werden, welches gegebenfalls als Toleranz zur Regelung des Ladezustands (im Fall von Energiespeichern) genutzt werden könnte.

Die Bandbreite definiert ein variables Totband, dessen Breite vom Ladezustand des Energiespeichers abhängt. Die Breiten der Bandbreite und des Totbands werden auf die Frequenzabweichung skaliert, beziehen sich also auf eine Frequenz, beziehungsweise eben die Frequenzabweichung. Das variable Totband ist nicht mit dem vom Netzbetreiber vorgegebenen Totband zu verwechseln.

Insbesondere kann es sich bei dem Verfahren um ein Verfahren zur Bereitstellung von Primärregelleistung handeln.

Hierdurch gelingt es auf nicht vorhersehbare Weise ein Verfahren zur Bereitstellung von Regelleistung für ein Stromnetz zu realisieren, bei dem zumindest ein an das Stromnetz angeschlossener Energiespeicher dem Stromnetz nach Bedarf Energie zuführt und/oder aus dem Stromnetz nach Bedarf Energie aufnimmt, das nicht mit den Nachteilen herkömmlicher Verfahren behaftet ist.

Auch ist auf diese Weise sichergestellt, dass es keine, den Ladezustand des Energiespeichers ausgleichenden Vorgänge gibt, die das Stromnetz beziehungsweise die Netzfrequenz in eine unerwünschte Richtung (weg von der Sollfrequenz) lenken und gleichzeitig wird die Zahl der über den Energiehandel erforderlichen Abstimmungsvorgänge reduziert.

Ferner wird die Wirtschaftlichkeit des Betriebs von Energiespeichern, wie Akkumulatoren, zur Primärregelleistungsbereitstellung durch Vermeidung von ineffizienten Ladezuständen durch das erfindungsgemäße Verfahren verbessert, wobei insbesondere eine Bereitstellung von Primärregelleistung mit geringerer Energiespeicher-Kapazität ermöglicht wird.

Außerdem wird durch das erfindungsgemäße Verfahren eine geringere Alterungsbelastung erreicht, sowie ein zwischenzeitliches Laden für die Bereitstellung der Primärregelleistung vermieden.

Ferner wird die benötigte Regelleistung bei effizienter Energieausbeute des Regelleistungslieferanten bereitgestellt.

Als Energiespeicher kommen insbesondere Systeme mit stark eingeschränkter Speichergröße in Frage. Im englischsprachigen Raum werden diese u. a. als Limited Energy Storage Resources (LESRs) bezeichnet.

Insbesondere bei einer Verwendung von galvanischen Elementen, wie Akkumulatoren, kann, aufgrund der Möglichkeit die Regelleistung des Energiespeichers schnell zu ändern, die Kapazität des Energiespeichers gering gehalten werden, um die erforderliche Regelleistung bereitzustellen.

Darüber hinaus kann das erfindungsgemäße Verfahren sehr einfach und kostengünstig durchgeführt werden.

Ferner kann das Verfahren mit relativ wenigen Verfahrensschritten durchgeführt werden, wobei dieselben einfach und reproduzierbar sind.

Bei erfindungsgemäßen Verfahren kann bevorzugt vorgesehen sein, dass die Bandbreite in Abhängigkeit vom Ladezustand, insbesondere vom aktuellen Ladezustand, des Energiespeichers kleiner als die Breite des Totbands gewählt wird, wenn der Ladezustand von einem mittleren Ladezustand abweicht, wobei vorzugsweise als der mittlere Ladezustand derjenige halbgeladene Ladezustand definiert wird, bei dem der Energiespeicher in etwa die Hälfte des maximal möglichen Energiegehalts enthält, insbesondere zwischen 40% und 60% des maximal möglichen Energiegehalts, oder als der mittlere Ladezustand ein Ladezustandsbereich im Bereich des halbgeladenen Ladezustands definiert wird, besonders bevorzugt umfassend den halbgeladenen Ladezustand, insbesondere zwischen 20% und 80% des maximal möglichen Energiegehalts, ganz besonders bevorzugt zwischen 30% und 70% des maximal möglichen Energiegehalts.

Dabei kann vorgesehen sein, dass eine der Grenzen der Bandbreite als diejenige Frequenzabweichung von der Sollfrequenz definiert wird, die durch die Genauigkeit der Messung festgelegt wird, oder eine der Grenzen der Bandbreite durch die Sollfrequenz definiert wird oder durch eine Frequenzabweichung zwischen diesen Werten, wobei die untere Grenze der Bandbreite derart definiert wird, wenn der Ladezustand des Energiespeichers reduziert werden soll, insbesondere der Ladezustand oberhalb des mittleren Ladezustands liegt, und/oder die obere Grenze der Bandbreite derart definiert wird, wenn der Ladezustand des Energiespeichers erhöht werden soll, insbesondere der Ladezustand unterhalb des mittleren Ladezustands liegt.

Solche Ausführungen der Erfindung führen dazu, dass der Energiespeicher mit besonders geringer Energiespeicherkapazität ausgebildet werden kann.

Um eine besonders effiziente und für den Netzbetreiber vorteilhafte Bereitstellung von Regelleistung zu ermöglichen, kann vorgesehen sein, dass für zumindest einen Ladezustand des Energiespeichers die Bandbreite bis zur Genauigkeit der Messung der Frequenzabweichung reduziert wird.

Ferner kann vorgesehen sein, dass durch die Wahl der Bandbreite und die Bereitstellung von Regelleistung im Totband der Ladezustand des Energiespeichers angepasst wird, vorzugsweise ein mittlerer Ladezustand angestrebt wird.

Gemäß einer weiteren Ausgestaltung der Erfindung kann auch vorgesehen sein, dass die Bandbreite aus zwei oder mehr vorherbestimmten Bandbreiten ausgewählt wird, wobei verschiedenen Ladungszuständen, vorzugsweise jedem Ladezustand des Energiespeichers oder verschiedenen Bereichen des Ladezustands vorzugsweise jedem Bereich des Ladezustands vorherbestimmten Bandbreiten zugeordnet werden.

Die vorherbestimmten Bandbreiten können zuvor festgelegt sein oder aber wiederum Funktionen anderer Parameter sein, wie beispielsweise der Tageszeit, der Jahreszeit, dem Wochentag, der Uhrzeit, dem Zustand des Energiespeichers (beispielsweise bedingt durch Alterung), der Poolung mit anderen Energiespeichern oder mit Energieerzeugern oder Energieverbrauchern und/oder andere die zu erwartende Regelleistung beeinflussende Größen. Vorausgewählte Bandbreiten vereinfachen die Durchführung des Verfahrens, da dann keine komplizierten Berechnungen mehr durchgeführt werden müssen.

Gemäß einer weiteren vorteilhaften Ausgestaltung des erfindungsgemäßen Verfahrens kann vorgesehen sein, dass die Bandbreite proportional einer Ladezustandsdifferenz des aktuellen Ladezustands des Energiespeichers vom mittleren Ladezustand gewählt wird, insbesondere die Bandbreite linear von der Ladezustandsdifferenz des aktuellen Ladezustands vom mittleren Ladezustand abhängt.

Hier werden Berechnungen durchgeführt, die das Verfahren zwar verkomplizieren, aber auch dazu führen, dass sich der Ladezustand des Energiespeichers nur bei großen Abweichungen stark ändert und somit eine zweckmäßige Rückführung des Ladezustands zu dem mittleren Ladezustand bewirkt.

Ferner kann vorgesehen sein, dass der Ladezustand des Energiespeichers gemessen wird, insbesondere kontinuierlich gemessen wird, wobei die vom Energiespeicher ans Stromnetz abgegebene Regelleistung in Abhängigkeit vom Ladezustand geregelt wird.

Eine weitere Ausgestaltung des erfindungsgemäßen Verfahrens kann vorsehen, dass außerhalb der Bandbreite Regelleistung wie vom Stromnetzbetreiber gewünscht bereitgestellt wird und/oder der Betrag der Regelleistung bezüglich der Frequenzabweichung bereichsweise antiproportional zur Frequenzabweichung der Netzfrequenz erbracht wird, vorzugsweise linear zur Frequenzabweichung.

Diese Ausgestaltung ist für den Netzbetreiber und die Netzfrequenz besonders vorteilhaft, da der Energiespeicher nicht kontraproduktiv arbeitet sondern sogar im Totband produktiv, das heißt, die Netzfrequenz regulierend.

Den gleichen Vorteil bietet ein erfindungsgemäßes Verfahren, bei dem vorgesehen ist, dass innerhalb der Bandbreite keine Leistung aus dem Energiespeicher ins Stromnetz abgegeben wird und keine Leistung aus dem Stromnetz in den Energiespeicher aufgenommen wird.

Eine besonders bevorzugte Ausgestaltung der Erfindung kann vorsehen, dass die Frequenzabweichung mit einer Genauigkeit von zumindest ± 8 mHz, besonders bevorzugt von zumindest ± 4 mHz, ganz besonders bevorzugt von zumindest ± 2 mHz, speziell bevorzugt von zumindest ± 1 mHz gemessen wird.

Bei diesen Genauigkeiten kann eine besonders effiziente Regelung des Ladungszustands des Energiespeichers erfolgen. Je höher die Genauigkeit beim Bestimmen der Frequenzabweichung der Netzfrequenz vom Sollwert durchgeführt werden kann, desto größer ist der Spielraum, der genutzt werden kann, um den Ladezustand des Energiespeichers anzupassen. Grundsätzlich gilt also, dass eine höhere Genauigkeit dazu führt, dass die Bandbreite enger gewählt werden kann und so eine effizientere Einstellung des Ladezustands möglich ist. Ab einer Genauigkeit von ± 1 mHz und damit einer Bandbreite von minimal 2 mHz führt dies jedoch zu keiner deutlichen Verbesserung mehr.

Eine weitere Ausgestaltung der Erfindung kann vorsehen, dass bei einer Änderung der benötigten Regelleistung der Zeitpunkt nach der Änderung, ab dem vom Energiespeicher eine Regelleistung bereitgestellt wird, in Abhängigkeit vom aktuellen Ladezustand des Energiespeichers gewählt wird.

Dabei kann vorgesehen sein, dass der Zeitpunkt in einem Zeitintervall zwischen der Änderung der benötigten Regelleistung und einer maximalen Zeit nach der Änderung liegt, wobei insbesondere das Zeitintervall im Falle einer Bereitstellung von Primärregelleistung 30 Sekunden beträgt.

Es kann ferner vorgesehen sein, dass durch die Wahl des Zeitpunkts der Ladezustand des Energiespeichers angepasst wird, insbesondere ein gewünschter mittlerer Energiegehalt im Energiespeicher angestrebt wird, wobei der gewünschte mittlere Energiegehalt im Bereich zwischen 20 % und 80 % des maximalen Energiegehalts im Energiespeichers liegt, vorzugsweise zwischen 40 % und 60 %, besonders bevorzugt bei 50 % des maximalen Energiegehalts im Energiespeichers liegt.

Durch dieses Anstreben eines mittleren gewünschten Ladezustands beziehungsweise des mittleren gewünschten Energiegehalts des Energiespeichers kann die Verwendung eines solchen Energiespeichers in überraschender vorteilhafter Weise für die Bereitstellung von Regelleistung für ein Stromnetz genutzt werden, ohne dass beispielsweise Energiespeicher mit größeren Kapazitäten notwendig werden. Hierdurch können die Nachteile klassischer Energieerzeuger und Energieverbraucher, die für die Bereitstellung von Regelleistung zumeist in Teillast gefahren werden müssen, vermieden werden. Das große Trägheitsmoment solcher Kraftwerke in Bezug auf das Hoch- und Runterfahren der Betriebsleistung generiert enorme zusätzliche Kosten und ist insofern nachteilig. Der Ladezustand entspricht im Fall von Akkumulatoren als Energiespeicher dem Ladungszustand (engl.: "State-of-Charge", SOC) oder dem Energiegehalt (engl.: State-of-Energie, SoE).

Ferner kann vorgesehen sein, dass ein Regelleistungsgradient in Abhängigkeit vom Ladezustand des Energiespeichers gewählt wird, wobei insbesondere der zeitliche Verlauf des Betrags der Regelleistung eingestellt und die Toleranz des Betrags der bereitzustellenden Regelleistung über die Zeit genutzt wird.

Dabei kann vorgesehen sein, dass bei Änderung der Regelleistungsanfrage, insbesondere bei einer gemessenen Änderung der Frequenzabweichung, das dynamische Verhalten, mit dem der Energiespeicher auf die Änderung des Sollwertes reagiert, in Abhängigkeit vom aktuellen Ladezustand des Energiespeichers gewählt wird, wobei bevorzugt das gewählte dynamische Verhalten von der Art der nachgefragten Regelleistung abhängt, wobei insbesondere die Zeit in der die volle Regelleistung erbracht werden muss im Falle einer Bereitstellung von Primärregelleistung 30 Sekunden, im Falle einer Bereitstellung von Sekundärregelleistung 5 Minuten und im Falle einer Bereitstellung von Minutenreserve 15 Minuten beträgt.

Eine weitere Ausgestaltung der Erfindung unter Ausnutzung der dynamischen Toleranz kann vorsehen, dass durch die geeignete Wahl des dynamischen Verhaltens des Energiespeichers auf die Änderung einer Regelleistungsanfrage reagiert wird und dadurch der Ladezustand des Energiespeichers angepasst wird.

In einer bevorzugten Ausführungsform des erfindungsgemäßen Verfahrens kann vorgesehen sein, dass bei einer Änderung der benötigten Regelleistung eine positive Regelleistung zu einem frühen Zeitpunkt, vorzugsweise sofort in das Stromnetz eingespeist wird und/oder eine negative Regelleistung zu einem späten Zeitpunkt, vorzugsweise zum spätesten möglichen Zeitpunkt aus dem Stromnetz entnommen wird, wenn der Ladezustand des Energiespeichers oberhalb eines ersten Grenzwerts liegt und/oder bei einer Änderung der benötigten Regelleistung eine negative Regelleistung früh, vorzugsweise sofort aus dem Stromnetz entnommen wird und/oder eine positive Regelleistung zu einem späten Zeitpunkt, vorzugsweise zum spätesten möglichen Zeitpunkt in das Stromnetz eingespeist wird, wenn der Ladezustand des Energiespeichers unterhalb eines zweiten Grenzwerts liegt, wobei die beiden Grenzwerte besonders bevorzugt einen gewünschten mittleren Ladezustand definieren.

Die Kopplung der dynamischen Bereitstellung von Regelleistung durch den Energiespeicher in Abhängigkeit von seinem Ladezustand ermöglicht es in vorteilhafter Weise auf Regelleistungsanfragen zu reagieren, wobei die Kapazität des Energiespeichers so genutzt werden soll, dass er sich möglichst im mittleren Ladezustand befindet, um hierdurch eine möglichst effiziente und kostenbewusste Handhabung zu gewährleisten.

In einer weiteren Ausführungsform des erfindungsgemäßen Verfahrens wird der Energiespeicher gemeinsam mit zumindest einem Energieerzeuger und/oder zumindest einem Energieverbraucher für die Bereitstellung von Regelleistung für das Stromnetz betrieben.

Hierbei kann es insbesondere vorgesehen sein, dass der Energiespeicher in seiner Regelung und/oder Steuerung in Abhängigkeit und in Wirkverbindung mit dem zumindest einen Energieerzeuger und/oder mit dem zumindest einen Energieverbraucher bei der Bereitstellung von Regelleistung für ein Stromnetz betrieben wird.

Als Energieerzeuger kann ein Kraftwerk, vorzugsweise ein Kohlkraftwerk, Gaskraftwerk oder ein Wasserkraftwerk verwendet werden, während als Energieverbraucher ein Werk zum Herstellen einer Substanz, insbesondere ein Elektrolyse-Werk oder ein Metall-Werk, vorzugsweise ein Aluminium-Werk oder ein Stahlwerk, zum Einsatz kommen kann.

Solche Energieerzeuger und Energieverbraucher sind zur Bereitstellung von längerfristigen Regelleistungen gut geeignet. Ihre Trägheit lässt sich erfindungsgemäß gut mit Energiespeichern ausgleichen.

Eine weitere bevorzugte Ausführungsform der Erfindung kann vorsehen, dass im Totband keine negative Regelleistung aus dem Stromnetz aufgenommen wird, wenn der Ladezustand des Energiespeichers oberhalb eines ersten Grenzwerts liegt und/oder im Totband keine positive in das Stromnetz eingespeist wird, wenn der Ladezustand des Energiespeichers unterhalb eines zweiten Grenzwerts liegt, wobei die beiden Grenzwerte bevorzugt den mittleren Ladezustandsbereich definieren.

Ferner kann vorgesehen sein, dass als Energiespeicher ein Schwungrad, ein Wärmespeicher, ein Wasserstofferzeuger und -speicher mit Brennstoffzelle, ein Erdgaserzeuger mit Gaskraftwerk, ein Pumpspeicherkraftwerk, ein Druckluftspeicherkraftwerk, ein supraleitender magnetischer Energiespeicher, ein Redox-Flow-Element und/oder ein galvanisches Element verwendet wird, vorzugsweise ein Akkumulator und/oder ein Batteriespeicherkraftwerk. Der Wärmespeicher muss zusammen mit einer Vorrichtung zur Herstellung von Strom aus der gespeicherten Wärmeenergie betrieben werden.

Insbesondere kann hierbei als Energiespeicher ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren verwendet werden.

Insbesondere Akkumulatoren sind aufgrund ihrer schnellen Reaktionszeit, das heißt, der Geschwindigkeit, mit der die Leistung gesteigert oder reduziert werden kann, für erfindungsgemäße Verfahren besonders geeignet. Zudem ist auch der Wirkungsgrad, insbesondere bei Li-Ionen-Akkumulatoren gut im Vergleich zu vielen anderen Energiespeichern.

Zu den Akkumulatoren zählen insbesondere Bleiakkumulatoren, Natrium-Nickelchlorid-Akkumulatoren, Natrium-Schwefel-Akkumulatoren, Nickel-Eisen-Akkumulatoren, Nickel-Cadmium-Akkumulatoren, Nickel-Metallhydrid-Akkumulatoren, Nickel-Wasserstoff-Akkumulatoren, Nickel-Zink-Akkumulatoren, Zinn-Schwefel-Lithium-Ionen-Akkumulatoren, Natrium-Ionen Akkumulatoren und Kalium-Ionen-Akkumulatoren.

Hierbei sind Akkumulatoren bevorzugt, die einen hohen Wirkungsgrad sowie eine hohe betriebliche und kalendarische Lebensdauer aufweisen. Als besonders bevorzugte Ausführungsform der Erfindung, werden Lithium-Polymer-Akkumulatoren, Lithium-Titanat-Akkumulatoren, Lithium-Mangan-Akkumulatoren, Lithium-Eisen-Phosphat-Akkumulatoren, Lithium-Eisen-Mangan-Phosphat-Akkumulatoren, Lithium-Eisen-Yttrium-Phosphat-Akkumulatoren, Lithium-Luft-Akkumulatoren, Lithium-Schwefel-Akkumulatoren und/oder Zinn-Schwefel-Lithium-Ionen-Akkumulatoren als Lithium-Ionen-Akkumulatoren verwendet.

Auch kann vorgesehen sein, dass der Energiespeicher eine Kapazität von zumindest 1 kWh, bevorzugt zumindest 10 kWh, besonders bevorzugt zumindest 50 kWh, ganz besonders bevorzugt zumindest 250 kWh besitzt.

Die Kapazität elektronischer Energiespeicher kann dabei bei zumindest 40 Ah, bevorzugt bei etwa 100 Ah liegen. Die einzelnen Zellen elektronischer Energiespeicher können bei zumindest 1 V, bevorzugt, bei zumindest 10 V, besonders bevorzugt bei zumindest 100 V arbeiten.

Diese Kapazitäten sind für den Betrieb eines Regelleistungs-Kraftwerks oder eines Regelleistungs-Verbrauchers noch relativ gering. Die im Vergleich zu handelsüblichen kleinen Energiespeichern, wie beispielsweise Handyakkumulatoren große Kapazität und das hohe Energiespeichervermögen sind geeignet, um die beträchtlichen Energien für die erfindungsgemäßen Verfahren auch bei großen Stromnetzen bereitstellen zu können.

Es kann auch vorgesehen sein, dass der Energiespeicher gemeinsam mit zumindest einem Energieerzeuger und/oder zumindest einem Energieverbraucher für die Bereitstellung von Regelleistung für das Stromnetz betrieben wird.

Dabei kann vorgesehen sein, dass eine Regelung und/oder Steuerung des Energiespeichers in Abhängigkeit und in Wirkverbindung mit dem zumindest einen Energieerzeuger und/oder mit dem zumindest einen Energieverbraucher bei der Bereitstellung von Regelleistung für ein Stromnetz betrieben wird.

Die Kombination des Energiespeichers mit einem Energieerzeuger und/oder Energieverbraucher ermöglicht es auch langfristig einseitige Regelleistungen bereitstellen zu können.

Eine weitere Ausgestaltung der Erfindung kann vorsehen, dass eine Toleranz bezüglich der Frequenzabweichung von der Sollfrequenz des Stromnetzes genutzt wird, um den Ladezustand des Energiespeichers gleichzeitig mit der Bereitstellung der Regelleistung durch den Energiespeicher einzustellen.

Wenn zusätzlich andere Toleranzen genutzt werden, um den Ladezustand des Energiespeichers anzupassen, so kann die Kapazität des Energiespeichers kleiner gewählt werden und so Ressourcen und Kosten gespart werden.

Dementsprechend kann auch vorgesehen sein, dass die Toleranz bezüglich des Betrags der bereitgestellten Regelleistung genutzt wird, um den Ladezustand des Energiespeichers gleichzeitig mit der Bereitstellung der Regelleistung durch den Energiespeicher einzustellen, wobei vorzugsweise zur Nutzung der Toleranz bezüglich des Betrags der bereitgestellten Regelleistung der Betrag der angeforderten Regelleistung überschritten wird, insbesondere um maximal 30 % und/oder um 10 MW, besonders bevorzugt um maximal 20 % und/oder um 10 MW, wobei besonders bevorzugt die prozentuale Überschreitung des Betrags der angeforderten Regelleistung proportional der Abweichung des Ladezustands des Energiespeichers von dem mittleren Ladezustand gewählt wird.

Bei diesen beiden Ausgestaltungen des erfindungsgemäßen Verfahrens kann vorgesehen sein, dass der Ladezustand des Energiespeichers dadurch eingestellt wird, dass für den Fall, in dem der Ladezustand des Energiespeichers oberhalb eines ersten Grenzwerts liegt, der Energiespeicher eine innerhalb der Toleranz oder der Toleranzen liegende größere Regelleistung in das Stromnetz einspeist oder eine innerhalb der Toleranz oder der Toleranzen liegende kleinere Regelleistung aus dem Stromnetz aufnimmt und/oder für den Fall, in dem der Ladezustand des Energiespeichers unterhalb eines zweiten Grenzwerts liegt, der Energiespeicher eine innerhalb der Toleranz oder der Toleranzen liegende kleinere Regelleistung in das Stromnetz einspeist oder eine innerhalb der Toleranz oder der Toleranzen liegende größere Regelleistung aus dem Stromnetz aufnimmt.

Hierdurch werden Details gegeben, wie eine erfindungsgemäße Steuerung des Ladezustands erreicht werden kann. Diese Grundzüge geben allgemeingültige Eckpunkte eines erfindungsgemäßen Verfahrens wieder, das die der Erfindung zugrundeliegenden Aufgaben löst.

Unter der Toleranz bezüglich des Betrags der bereitgestellten Regelleistung und der Toleranz bei der Bestimmung der Frequenzabweichung ist erfindungsgemäß zu verstehen, dass vom Netzbetreiber, aufgrund technischer Rahmenbedingungen, wie der Messgenauigkeit beim Bestimmen der erbrachten Regelleistung oder der Netzfrequenz, gewisse Abweichungen zwischen einer idealen Sollleistung und der tatsächlich erbrachten Regelleistung akzeptiert werden. Die Toleranz kann vom Netzbetreiber gewährt sein, könnte aber auch einer gesetzlichen Vorgabe entsprechen.

Der Vorteil dieser Vorgehensweisen ist darin zu sehen, dass es auch während des Erbringens der Regelleistung und damit auch kontinuierlich gelingt, den Ladezustand (Ladungszustand) des Energiespeichers beziehungsweise die im Energiespeicher enthaltene Energiemenge zu regulieren. Die Begriffe Ladungszustand und Ladezustand sind erfindungsgemäß als Äquivalent anzusehen.

Bei der Verwendung von Grenzwerten der Bandbreite kann vorgesehen sein, dass der erste Grenzwert des Ladezustands zwischen 40% und 80% der maximalen Ladung des Energiespeichers liegt, vorzugsweise zwischen 45% und 70%, besonders bevorzugt zwischen 50% und 60%, und/oder der zweite Grenzwert des Ladezustands zwischen 20% und 60% der maximalen Ladung, vorzugsweise zwischen 30% und 55%, besonders bevorzugt zwischen 40 % und 50%, oder der erste und der zweite Grenzwert des Ladezustands bei 50% der maximalen Ladung des Energiespeichers liegen.

Die genannten Bereiche für die Grenzwerte des Ladezustands des Energiespeichers sind erfindungsgemäß für die Realisierung erfindungsgemäßer Verfahren besonders geeignet. Insbesondere bei einer großen Kapazität des Energiespeichers können die Grenzwerte auch bei 80% beziehungsweise 20% der maximalen Ladung des Energiespeichers liegen.

Eine besonders bevorzugte Ausgestaltung eines erfindungsgemäßen Verfahrens ergibt sich, wenn vorgesehen ist, dass ein Regelleistungsgradient in Abhängigkeit vom Ladezustand des Energiespeichers gewählt wird, wobei insbesondere der zeitliche Verlauf des Betrags der Regelleistung eingestellt und die Toleranz des Betrags der bereitzustellenden Regelleistung über die Zeit genutzt wird.

Dabei wird genutzt, dass es beispielsweise durch den Netzbetreiber oder auch durch gesetzliche Vorgaben Toleranzen bezüglich des Anstiegs oder Abfalls der bereitzustellenden Regelleistung gibt. Diese Toleranzen können erfindungsgemäß genutzt werden, um den Ladezustand des Energiespeichers anzupassen. Hierdurch ergibt sich eine weitere Verbesserung bei der Ladezustandsoptimierung, beziehungsweise diese Ausführungsform stellt eine besonders bevorzugte Realisierung des erfindungsgemäßen Verfahrens dar. Dadurch kann die Größe, beziehungsweise die Kapazität des Energiespeichers weiter reduziert werden.

Ferner kann besonders bevorzugt vorgesehen sein, dass bei einer Änderung der Frequenzabweichung um weniger als einen Unempfindlichkeitsbereich, insbesondere um weniger als 10 mHz, eine veränderte Regelleistung nur erbracht wird, um den Ladezustand des Energiespeichers einzustellen, insbesondere die veränderte Regelleistung nur dann erbracht wird, wenn sich der Ladezustand des Energiespeichers dadurch möglichst stark zum mittleren Ladezustand hin oder möglichst wenig vom mittleren Ladezustand weg lädt oder entlädt.

Die Änderung der Frequenzabweichung bezieht sich hierbei auf diejenige Frequenzabweichung, bei der die letzte Regelleistungsanpassung erfolgte. Hierbei wird eine weitere Toleranz genutzt. Diese Toleranz kann durch den Netzbetreiber oder den Gesetzgeber oder systemimmanent gegeben sein. Die Toleranz erlaubt es, dass wenn nur geringe Änderungen der Frequenzabweichung der Netzfrequenz von der Sollfrequenz auftreten, dass dann keine Anpassung der Regelleistung erfolgen muss. Um den Ladezustand des Energiespeichers in die gewünschte Richtung zu entwickeln, kann dennoch Regelleistung erbracht werden. Diese Regelleistungserbringung erfolgt gegebenenfalls in der Art, wie dies erwünscht ist, also beispielsweise direkt antiproportional zur Frequenzabweichung. Wenn also Regelleistung zur Anpassung des Ladezustands erbracht wird, würde dies zur Regelung der Netzfrequenz beitragen. Die Anpassung des Ladezustands erfolgt also immer konstruktiv im Sinne der Regelung der Netzfrequenz. Voraussetzung dafür ist, dass die Frequenzabweichung mit einer höheren Genauigkeit als der Unempfindlichkeitsbereich gemessen werden kann. Der Unempfindlichkeitsbereich ist ein Maß für die Toleranz der Änderung der Frequenzabweichung, ab der eine Änderung der Regelleistung gefordert wird oder notwendig ist.

Die Aufgabe der Erfindung wird auch gelöst durch eine Vorrichtung zum Durchführen eines solchen Verfahrens, wobei die Vorrichtung zumindest einen Energiespeicher und eine Steuerung zum Steuern oder Regeln der Regelleistung des Energiespeichers umfasst, wobei der Energiespeicher derart an ein Stromnetz angeschlossen ist, dass durch die Vorrichtung Energie in das Stromnetz einspeisbar und aus dem Stromnetz entnehmbar ist.

Unter einer Steuerung wird erfindungsgemäß vorliegend eine einfache Steuerung verstanden. Hierbei sei angemerkt, dass jede Regelung eine Steuerung umfasst, da bei einer Regelung eine Steuerung in Abhängigkeit von einer Differenz eines Istwerts zu einem Sollwert erfolgt. Bevorzugt ist die Steuerung also als Regelung ausgebildet, insbesondere bezüglich des Ladezustands. Besonders bevorzugt ist die Steuerung ein Leitsystem.

Dabei kann vorgesehen sein, dass die Vorrichtung zumindest einen Energieerzeuger und/oder zumindest einen Energieverbraucher umfasst, der oder die derart an das Stromnetz angeschlossen ist oder sind, dass durch den Energieerzeuger Regelleistung in das Stromnetz einspeisbar und/oder durch den Energieverbraucher aus dem Stromnetz entnehmbar ist und der Energiespeicher vorzugsweise durch den Energieerzeuger aufladbar und/oder durch den Energieverbraucher entladbar ist.

Ferner kann vorgesehen sein, dass die Vorrichtung eine Vorrichtung zum Messen des Ladezustands des zumindest einen Energiespeichers und/oder eine Vorrichtung zum Messen der Frequenzabweichung der Netzfrequenz von der Sollfrequenz und einen Datenspeicher umfasst, wobei in dem Datenspeicher zumindest eine Bandbreite und/oder der mittlere Ladezustand des Energiespeichers gespeichert ist, wobei die Steuerung auf den Datenspeicher Zugriff hat und dazu ausgelegt ist, in Abhängigkeit von dem Ladezustand des Energiespeichers und/oder von der Frequenzabweichung die vom Energiespeicher abgegebene und aufgenommene Regelleistung zu steuern.

Auch kann vorgesehen sein, dass der Energiespeicher ein Akkumulator ist, vorzugsweise ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren ist.

Der Erfindung liegt die überraschende Erkenntnis zugrunde, dass es zur Anpassung des Ladezustands eines Energiespeichers zur Erbringung von Regelleistung ausreicht, nur in einem Teil des Totbands keine Regelleistung zu erbringen, um den Ladezustand in Richtung eines gewünschten mittleren Ladezustand zu entwickeln. Tatsächlich erbringt der Energiespeicher bei einem erfindungsgemäßen Betrieb mit einem erfindungsgemäßen Verfahren auch bei Frequenzabweichung und daher zu Zeiten Regelleistung, zu denen er dies gar nicht müsste. Insofern wird durch erfindungsgemäße Verfahren eine zusätzliche Stabilisierung der Netzfrequenz bei der Sollfrequenz erreicht.

Gleichzeitig können erfindungsgemäß Energiespeicher derart betrieben werden, dass die von den Netzbetreibern gegebenen Toleranzen beim Erbringen von Regelleistung dazu genutzt werden, den Ladezustand des Energiespeichers in einem mittleren Bereich zu halten und so die Kapazität des Energiespeichers in einem kostengünstigen Rahmen zu halten. Dies gilt insbesondere für Energiespeicher, die Energie schnell, das heißt mit hohen Leistungsgradienten aufnehmen und abgeben können, wie zum Beispiel Schwungräder und insbesondere Akkumulatoren und Batteriespeicher. Die von den Netzbetreibern eingeräumten Toleranzen, wie das Totband rühren unter anderem daher, dass die Regelleistung derzeit zumeist von größeren Kraftwerken, wie beispielsweise Kohlekraftwerken und größeren Verbrauchern, wie beispielsweise Elektrolyse-Werken bereitgestellt wird. Diese Regelleistungslieferanten haben eine große Trägheit bei der Aufnahme und Abgabe von Regelleistung, das heißt, dass ihre Leistungsgradienten klein sind und Effekte wie Überschwingen in einem gewissen Rahmen unvermeidbar sind. Daher werden gewisse Toleranzen eingeräumt. So müssen beispielsweise Regelleistungslieferanten nicht schon bei kleinsten Abweichungen der Netzfrequenz von der Sollfrequenz Regelleistung liefern, sondern es wird eine Toleranz in Form eines Totbands bei der Frequenzabweichung der Netzfrequenz eingeräumt, ab der Regelleistung zur Verfügung gestellt werden muss. Ferner wird eine Toleranz bei der Messung der Frequenzabweichung der Netzfrequenz eingeräumt, so dass die zu erbringende Regelleistung in einem gewissen Rahmen (in einer Toleranz) frei gewählt werden kann.

Auch der Zeitpunkt, ab dem eine Regelleistung nach einer Änderung der erforderlichen Regelleistung, also einer Änderung des Sollwerts der Regelleistung erbracht werden muss, nachdem sich die erforderliche Regelleistung geändert hat, hat eine Toleranz. Auch diese Toleranz kann erfindungsgemäß genutzt werden, um den Ladezustand des Energiespeichers anzupassen, in dem mehr oder weniger Energie in den Energiespeicher eingespeichert wird oder mehr oder weniger Energie aus dem Energiespeicher an das Stromnetz abgegeben wird. Durch die Steuerung mit dem Energiespeicher wird in Abhängigkeit vom Ladezustand (also bei Bedarf) eine trägere Regelleistungsquelle erzeugt, um den Ladezustand des Energiespeichers anzupassen.

Eine weitere Toleranz ergibt sich auch bei der Genauigkeit welche Leistung in das Stromnetz eingespeist oder aus dem Stromnetz aufgenommen werden kann. Dabei ist es für den Netzbetreiber meist nicht wichtig ob die geforderte Regelleistung erbracht wird oder ob diese um einen bestimmten Betrag überschritten wird.

Diese Toleranzen und die Toleranz bezüglich des Totbands können genutzt werden um mehr oder weniger Regelleistung zur Verfügung zu stellen und so den Energiespeicher gezielt stärker oder weniger stark zu laden oder zu entladen. Dadurch kann der Ladezustand gezielt beeinflusst werden. So gelingt es erfindungsgemäß den Ladezustand des Energiespeichers in einem gewünschten, beispielsweise in einem mittleren Bereich zu halten, so dass der Energiespeicher sich in einem guten oder sogar optimalen Ausgangszustand für die nächste oder eine geänderte Regelleistungsanfrage befindet.

Der Ladezustand muss dann nicht mehr oder kann mit weniger Energie aus dem Stromnetz reguliert werden. Zudem kann die Kapazität des Energiespeichers kleiner gewählt werden. Beides spart Kosten.

Batteriespeicher (Akkumulatoren) zeichnen sich gegenüber konventionellen Technologien zur Bereitstellung von Primär- und/oder Sekundärregelleistungen unter anderem dadurch aus, dass sie deutlich schneller die erbrachten Leistungen ändern können. In den meisten Fällen ist bei Batteriespeichern jedoch nachteilig, dass sie über eine vergleichsweise geringe Speicherkapazität verfügen, die erforderlichen Leistungen also nur über einen begrenzten Zeitraum erbringen können. Bei einer statistischen Auswertung der Frequenzabweichungen über die Zeit wurde im Rahmen der vorliegenden Erfindung überraschend gefunden, dass die angeforderten Leistungen in mehr als 75 % der aktiven Zeit (das heißt, es wird eine von Null abweichende Leistung erbracht) weniger als 20 % der Maximal-Leistung beziehungsweise der vermarkteten Leistung betragen.

Aus dieser erfindungsgemäßen Erkenntnis ergibt sich ebenfalls, dass die Kapazität des Energiespeichers und damit die bereitzuhaltende gespeicherte Regelleistungsmenge geringer gewählt werden kann und es mit einem erfindungsgemäßen Verfahren besonders gut gelingen kann, die Kapazität des Energiespeichers klein zu halten.

Es wird erfindungsgemäß genutzt, dass es mit modernen Messvorrichtungen und Messverfahren möglich ist, die Frequenzabweichung der Netzfrequenz genauer zu bestimmen, als es derzeit für die Erbringung von Regelleistung gefordert wird. Dadurch ist es möglich die zu erbringende Regelleistung innerhalb der vorgegebenen Toleranzen (also innerhalb der vorgegebenen Grenzen) frei zu wählen und dadurch erfindungsgemäße Verfahren zu realisieren.

Spezielle und besonders bevorzugte Ausführungsformen der Lösungsansätze bestehen darin, dass es sich bei dem Energiespeicher um einen Akkumulator oder Batteriespeicher handelt, der zur Erbringung von Primärregelleistung eingesetzt wird.

In einer weiteren speziellen Ausführungsform kann die bei negativer PR-Leistung in den Energiespeicher aufgenommene Energie am Spotmarkt veräußert werden, insbesondere wenn die Konditionen dort vorteilhaft sind.

Gemäß einer weiteren Ausführungsform kann im Rahmen der Vorgaben zur Erbringung von Regelleistung vorgesehen sein, dass durch den Energiespeicher insbesondere mehr Energie aus dem Netz aufgenommen als eingespeist wird. Dies kann dadurch erfolgen, dass gemäß den Regularien einschließlich der zuvor dargelegten Verfahrensweise bevorzugt sehr viel negative Regelleistung bereitgestellt wird, wohingegen gemäß den Regularien einschließlich der zuvor dargelegten Vorgehensweise bevorzugt nur die mindestens zugesicherte Leistung an positiver Regelleistung erbracht wird. Vorzugsweise wird durchschnittlich mindestens 0,1 % mehr an Energie aus dem Netz entnommen als eingespeist, insbesondere mindestens 0,2 %, bevorzugt mindestens 0,5 %, besonders bevorzugt mindestens 1,0 %, speziell bevorzugt 5%, wobei diese Werte auf einen Durchschnitt bezogen sind, der über einen Zeitraum von mindestens 15 Minuten, vorzugsweise mindestens 4 Stunden, besonders bevorzugt mindestens 24 Stunden und speziell bevorzugt mindestens 7 Tage gemessen wird, und sich auf die eingespeiste Energie beziehen.

Hierbei kann die zuvor dargelegte Regelleistungserbringung eingesetzt werden, um ein Maximum an Energie aus dem Netz zu entnehmen, wobei die maximal mögliche negative Regelleistung bereitgestellt wird, wohingegen nur ein Minimum an positiver Regelleistung erbracht wird.

In den Ausführungsformen zur bevorzugten und speziell zur maximalen Energieaufnahme können die hierdurch aus dem Netz entnommenen Energien über den zuvor beschriebenen Energiehandel verkauft werden, wobei dies vorzugsweise zu Zeitpunkten erfolgt, zu denen ein höchstmöglicher Preis zu erzielen ist. Hierzu können Prognosen über die Preisentwicklung herangezogen werden, die auf historischen Daten beruhen.

Weiterhin kann der Ladezustand des Energiespeichers zum Zeitpunkt eines geplanten Verkaufs an Energie vorzugsweise mindestens 70 %, besonders bevorzugt mindestens 80 % und besonders bevorzugt mindestens 90 % der Speicherkapazität betragen, wobei der Ladezustand nach dem Verkauf bevorzugt höchstens 80 %, insbesondere höchstens 70 % und besonders bevorzugt höchstens 60 % der Speicherkapazität beträgt.

In bevorzugten Ausführungsformen der Erfindung werden mehrere Energiespeicher gepoolt und in erfindungsgemäßer Verfahrensweise betrieben. Die Größe der Energiespeicher innerhalb des Pools kann dabei variieren. In einer besonders bevorzugten Ausführungsform wird bei den verschiedenen Energiespeichern eines Pools bei der Ausnutzung von Toleranzen, insbesondere der Wahl der Bandbreite im Totband der Wechsel von einer Parametereinstellung auf eine andere nicht die synchron, sondern gezielt zeitlich versetzt vorgenommen, um etwaige Störungen im Netz möglichst gering oder zumindest tolerabel zu halten.

In einer weiteren bevorzugten Ausführungsform variieren die bei den verschiedenen Verfahrensweisen genutzten Toleranzen, insbesondere der Wahl der Bandbreite im Totband abhängig von der Tageszeit, dem Wochentag oder der Jahreszeit. Zum Beispiel können in einem Zeitraum von 5 min vor bis 5 min nach dem Stundenwechsel werden Toleranzen enger definiert werden. Dies ist darin begründet, dass hier oft sehr rapide Frequenzänderungen stattfinden. Es kann im Interesse der Übertragungsnetzbetreiber liegen, dass hier geringere Toleranzen vorliegen und damit die Regelenergiebereitstellung sicherer im Sinne von schärfer erfolgt.

Die Aufgabenstellung kann erfindungsgemäß dadurch gelöst werden, dass eine Frequenzmessung mit höherer Genauigkeit eingesetzt wird, als es der Toleranz des Totbands (zum Beispiel im "GridCode" ± 10 mHz) entspricht, und das übliche Totband (aktuell im "GridCode" ± 10 mHz) in seiner Breite bis extremal zur tatsächlichen Frequenzmessgenauigkeit reduziert wird. Das reduzierte Totband ist äquivalent zur gewählten Bandbreite. Als Ausführungsbeispiel: die Frequenzmessgenauigkeit beträgt ± 2 mHz, dann kann das Totband auf bis zu ± 2 mHz reduziert werden beziehungsweise eine Bandbreite von bis zu 4 mHz gewählt werden. Der Betrieb außerhalb des in seiner Breite variablen Totbands, das heißt außerhalb der Bandbreite entspricht jeweils den ansonsten den üblichen Regularien.

Im Folgenden werden Ausführungsbeispiele der Erfindung anhand von drei schematisch dargestellten Figuren erläutert, ohne jedoch dabei die Erfindung zu beschränken. Dabei zeigt:
- Figur 1:: ein schematisches Regelleistungs-Zeit-Diagramm für ein erfindungsgemäßes Verfahren;
- Figur 2:: ein Ablaufdiagramm für ein erfindungsgemäßes Verfahren; und
- Figur 3:: eine schematische Darstellung einer erfindungsgemäßen Vorrichtung zur Bereitstellung von Regelleistung.

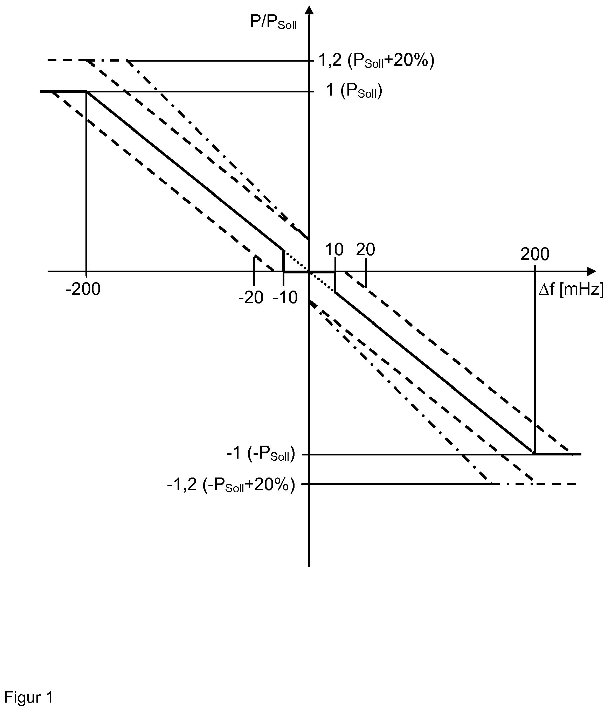

Figur 1 zeigt ein beispielhaftes schematisches Diagramm der normierten Leistung P/P_{Soll} über die Frequenzabweichung Δf = f - f_{Soll} zur Erbringung von Primärregelleistung, wie es von Netzbetreibern gefordert wird. Dabei ist f die aktuelle Frequenz des Stromnetzes und f_{Soll} die Sollfrequenz des Stromnetzes. Im europäischen Stromnetz wird eine Sollfrequenz von 50,000 Hz eingestellt, die Toleranz bei der Messung der Frequenzabweichung beträgt dabei derzeit ± 10 mHz. Die mittlere durchgezogene Kurve (zusammengesetzt aus Linien) zeigt die vom Netzbetreiber geforderte Regelleistung P als dimensionslose, auf die Nennleistung P_{Soll} normierte Leistung P/Pₛₒₗₗ. Bei einem Wert von 1 wird also die Nennleistung P_{Soll} als positive Regelleistung P erreicht und bei einem Wert von -1 die Nennleistung - P_{Soll} als negative Regelleistung P. Vorliegend soll die Nennleistung P_{Soll} ab Frequenzabweichungen von 200 mHz von der gewünschten Netzfrequenz 50,000 Hz bereitgestellt werden. Die gestrichelten Linien, die die durchgezogene Linie einhüllen, stellen die Toleranz bei der Messung der Frequenzabweichung (± 10 mHz) dar.

Um bei gegebener Toleranz bei der Messung der Frequenzabweichung (± 10 mHz) zu erreichen, dass die Bereitstellung von Regelleistung ausschließlich der Stabilisierung der Netzfrequenz dient und nicht kontraproduktiv gearbeitet wird, muss keine Regelleistung in einem Totband beziehungsweise in einer Toleranz von ± 10 mHz um die gewünschte Netzfrequenz von 50,000 Hz geliefert werden. Ansonsten könnte, wenn also im Bereich von - 10 mHz bis + 10 mHz der gepunkteten Linie gefolgt würde, aufgrund der Toleranz bei der Messung der Frequenzabweichung die Situation auftreten, dass bei einer tatsächlichen Frequenzabweichung im Bereich von 0 mHz bis + 10 mHz (beispielsweise + 4 mHz) wegen dieser Toleranz eine positive Regelleistung bereitgestellt würde, obwohl eigentlich eine negative Regelleistung gewünscht wäre, wenn aufgrund dieser Toleranz eine falsche Frequenzabweichung im Bereich von - 10 mHz bis 0 mHz aufgrund einer zugelassenen Abweichung von bis zu - 10 mHz gemessen worden wäre.

Das Totband kann als eine Toleranz bei der Erbringung von Regelleistung aufgefasst werden. Da bei der Messung der Frequenzabweichung Δf eine Toleranz von ± 10 mHz eingeräumt wird, muss also das Totband eingeführt werden, um kontraproduktive Regelleistung zu verhindern. Dies führt dazu, dass die durchgezogene Linie bei - 10 mHz und bei + 10 mHz eine Stufe aufweist, bei der die Regelleistung sprunghaft gesteigert werden soll, und dass die gestrichelten Linien an den Achsen unterbrochen sind. Außerhalb des Totbands wird eine Regelleistung gefordert, die antiproportional der Frequenzabweichung Δf ist (der Betrag der Regelleistung ist proportional dem Betrag der Frequenzabweichung Δf).

Auch darf die bereitgestellte negative und positive Regelleistung, auch die bereitzustellende Regelleistung, um bis zu 20% überschritten, nicht aber unterschritten werden. Diese Toleranz ist im Diagramm nach Figur 1 durch die Linien mit Strichpunkten dargestellt. Zusätzlich könnte auch eine Überschreitung um einen festen Betrag zum Beispiel um 5 MW erlaubt sein. Diese zusätzliche Toleranz ist in der vorliegenden Figur 1 nicht berücksichtigt und nicht dargestellt.

Bei erfindungsgemäßen Verfahren wird genutzt, dass mit einer genaueren Messung der Frequenzabweichung als ± 10 mHz (beispielsweise ± 4 mHz) in dem Totband von ± 10 mHz (waagerechte durchgezogene Linie, die zwischen + 10 mHz und - 10 mHz genau auf der Achse der Frequenzabweichung Δf liegt) eine Bandbreite definiert werden kann, innerhalb der keine Leistung erbracht wird, wobei außerhalb dieser Bandbreite normal (zur Frequenzabweichung antiproportionale) Regelleistung erbracht werden kann (entlang der gepunkteten Linie), ohne dass die Regelleistung kontraproduktiv erbracht wird. Gleichzeitig kann bei geeigneter Wahl der Grenzen der Bandbreite der Ladezustand des Energiespeichers, mit dem die Regelleistung erbracht wird, angepasst werden.

Für das Beispiel einer Genauigkeit von ± 4 mHz kann also eine Bandbreite von 8 mHz bis 20 mHz gewählt werden, wobei die Grenzen immer mindestens einen Abstand von 4 mHz zur Frequenzabweichung von 0 mHz (senkrechte P/P_{Soll}-Achse) einhalten müssen, wenn sichergestellt werden soll, dass unter keinen Umständen kontraproduktive Regelleistung erbracht wird. Die Bandbreite definiert dabei ein neues Totband. Daher kann aufgrund der Wählbarkeit der Bandbreite diese erfindungsgemäß auch als variables Totband betrachtet und bezeichnet werden. Innerhalb der Bandbreite beziehungsweise des variablen Totbands wird keine Regelleistung erbracht. Außerhalb hingegen kann Regelleistung erbracht werden, mit der, wie außerhalb des vom Netzbetreiber gegebenen Totbands, gegen die Frequenzabweichung gearbeitet wird und so die Netzfrequenz stabilisiert wird.

Durch die Wahl der Grenzen der Bandbreite beziehungsweise des variablen Totbands kann aber auch der Ladezustand des Energiespeichers angepasst werden. Für das Beispiel einer Genauigkeit der Messung der Frequenzabweichung von ± 4 mHz kann dies beispielsweise wie folgt realisiert werden. Es wird eine Bandbreite beziehungsweise ein variables Totband von ± 14 mHz gewählt, dessen untere Grenze bei - 10 mHz oder dessen obere Grenze bei + 10 mHz liegt. Wenn der Ladezustand des Energiespeichers zu klein ist, also unterhalb eines Normbereichs oder eines Normwerts liegt, dann sollte der Energiespeicher möglichst aufgeladen werden. Dazu wird die Bandbreite mit Grenzen von - 10 mHz bis + 4 mHz gewählt. Innerhalb dieser Grenzen wird keine Regelleistung erbracht, das heißt, Regelleistung entlang der durchgezogenen Linie nach Figur 1 erbracht. Außerhalb dieser Grenzen wird Regelleistung, wie gewünscht erbracht, das heißt antiproportional zur Frequenzabweichung Δf, also im Bereich von + 4 mHz bis + 10 mHz entlang der gepunkteten Linie eine negative Regelleistung. Obwohl also keine Regelleistung erbracht werden müsste, wird also in diesem Bereich Energie aus dem Stromnetz aufgenommen und damit der Energiespeicher geladen und so der Ladezustand angepasst.

Umgekehrt wird verfahren, wenn der Ladezustand des Energiespeichers zu groß ist, also oberhalb eines Normbereichs oder eines Normwerts liegt. Dann sollte der Energiespeicher möglichst entladen werden. Dazu wird die Bandbreite mit Grenzen von - 4 mHz bis + 10 mHz gewählt. Innerhalb dieser Grenzen wird keine Regelleistung erbracht, das heißt, Regelleistung entlang der durchgezogenen Linie nach Figur 1 erbracht. Außerhalb dieser Grenzen wird Regelleistung, wie gewünscht erbracht, das heißt antiproportional zur Frequenzabweichung Δf, also im Bereich von - 10 mHz bis - 4 mHz entlang der gepunkteten Linie eine positive Regelleistung. Obwohl also keine Regelleistung erbracht werden müsste, wird also in diesem Bereich Energie an das Stromnetz abgegeben und damit der Energiespeicher entladen und so der Ladezustand angepasst.

In beiden Fällen wird also die Lage der Bandbreite beziehungsweise des variablen Totbands asymmetrisch zur Frequenzabweichung von 0 mHz gewählt und hierdurch der gewünschte mittlere Ladezustand angestrebt. Wenn der gewünschte mittlere Ladezustand erreicht ist, beziehungsweise vorliegt, kann die Bandbreite beziehungsweise das variable Totband mit den Grenzen - 4 mHz bis + 4 mHz oder auch - 10 mHz bis + 10 mHz symmetrisch zur Frequenzabweichung 0 mHz gewählt werden oder mit Grenzen zwischen - 10 mHz und - 4 mHz beziehungsweise + 4 mHz und + 10 mHz symmetrisch oder asymmetrisch zur Frequenzabweichung von 0 mHz. Vorzugsweise werden jedoch die Grenzen - 4 mHz bis + 4 mHz gewählt, um die Netzfrequenz möglichst genau zu regeln.

Je nach Genauigkeit also je nach Art der Fehler bei der Messung der Frequenzabweichung Δf kann auch vorgesehen sein, dass die Grenzen der Bandbreite sogar enger als die Genauigkeit gewählt werden. Beispielsweise könnte der Fehlerbereich asymmetrisch sein, also die Frequenzabweichung im Bereich kleiner als 5 mHz genauer sein, als im Bereich darüber, zum Beispiel könnte der Messfehler proportional zur Frequenzabweichung sein, wodurch die Genauigkeit dann antiproportional zur Frequenzabweichung wäre. Auch kann dies sinnvoll sein, wenn der maximale Fehler bei der Bestimmung der Frequenzabweichung nur sehr selten auftritt. Es kann dann möglicherweise zwar zu einer kontraproduktiven Bereitstellung der Regelleistung kommen, jedoch nur sehr selten. Gleichzeitig wird die Netzfrequenz überproportional besser geregelt, so dass die geringe kontraproduktive Arbeitsweise toleriert beziehungsweise in Kauf genommen werden kann.

Wenn die Genauigkeit der Frequenzmessung größer als ± 4 mHz ist können die Grenzen der Bandbreite beziehungsweise des variablen Totbands noch enger gewählt werden und somit der Ladezustand des Energiespeichers noch besser angepasst werden. Um den Ladezustand noch weiter anzupassen, können zusätzlich auch die anderen Toleranzen genutzt werden.

Die Toleranzen bezüglich der Genauigkeit der Messung der Frequenzabweichung (gestrichelte Linien), der Übererfüllung der Regelleistung um einen prozentualen Wert (gestrichpunktete Linien) und der Übererfüllung der Regelleistung durch einen festen Betrag (nicht gezeigt) summieren sich zu einer Toleranz in der die Regelleistung P um die durchgezogene Kurve erbracht werden kann. Die Summe der ersten beiden Toleranzen ist durch die Fläche gegeben, die durch die beiden gestrichelten Kurven und durch die gestrichpunkteten Kurven begrenzt ist. Die gestrichelten und gestrichpunkteten Linien (Kurven) stellen die maximale und minimale Regelleistung dar, die unter Ausnutzung dieser beiden Toleranzen bei einer gegebenen Frequenzabweichung ins Stromnetz eingespeist oder aus dem Stromnetz entnommen werden kann, wenn eine fehlerfreie Messung der Frequenzabweichung vorliegt. Diese Toleranzen der angeforderten Regelleistung können zum Einstellen des Ladezustands des Energiespeichers genutzt werden.

Bei der Ausnutzung der Toleranzen, die durch die gestrichelten und die gestrichpunkteten Linien dargestellt sind, ist zu beachten, dass unter realen Bedingungen ein Abstand zu den gestrichelten und/oder gestrichpunkteten Kurven einzuhalten ist, der durch die eigene tatsächliche Messgenauigkeit begrenzt ist. Dadurch wird verhindert, dass die tatsächlich bereitgestellte Regelleistung außerhalb der Toleranz liegt. Je höher also die Genauigkeit der eigenen Messung der bereitgestellten Regelleistung und/oder der Frequenzabweichung Δf ist, desto dichter kann die Regelleistung auch an den gestrichelten beziehungsweise gestrichpunkteten Linien erbracht werden und desto besser lässt sich die Toleranz zwischen diesen Kurven auch ausnutzen.

Im Extremfall (bei beliebig genauer Frequenzmessung und/oder Leistungsmessung) kann also ein Energiespeicher entlang der gestrichelten beziehungsweise gestrichpunkteten Linien gefahren werden, um den Ladezustand des Energiespeichers in einem gewünschten mittleren Bereich zu halten. Insbesondere dann, wenn der Ladezustand schon im mittleren Bereich liegt oder bei einer Anfrage nach positiver Regelleistung knapp darüber oder bei einer Anfrage nach negativer Regelleistung knapp darunter, kann es jedoch durchaus auch sinnvoll sein, den Energiespeicher entlang der durchgezogenen Linie zu fahren, um Regelleistung wie gewünscht bereitzustellen. Bei einer leichten Abweichung kann es auch sinnvoll sein, in einem Zwischenbereich zwischen der durchgezogenen und den gestrichelten beziehungsweise gestrichpunkteten Linien zu fahren.

Der gepunkteten Linie innerhalb der Grenzen von ± 10 mHz kann ebenfalls eine Toleranz bezüglich der Regelleistung und der Frequenzmessung zugeordnet sein. Diese Toleranzen können bei Erbringung von Regelleistung außerhalb der Bandbreite ebenfalls genutzt werden.

Es kann auch eine zeitliche Toleranz gegeben sein, dass also beispielsweise erst 10 Sekunden oder 30 Sekunden nachdem eine Änderung der benötigten Regelleistung durch eine Änderung einer Frequenzabweichung Δf erkannt ist, die ein Einspeisen oder Aufnehmen von Regelleistung erforderlich macht, eine tatsächliche Bereitstellung der Regelleistung erfolgen muss. Auch diese zeitliche Toleranz kann erfindungsgemäß und gemäß einer besonders bevorzugten Ausführungsform eines erfindungsgemäßen Verfahrens genutzt werden, um den Ladezustand des Energiespeichers anzupassen, der zur Erbringung von Regelleistung genutzt wird.

Wenn der Energiespeicher relativ voll geladen ist, das heißt, der Ladezustand des Energiespeichers sich im oberen Bereich, also beispielsweise zwischen 75 % und 90 % der maximalen einzuspeichernden Energie des Energiespeichers befindet, so wird der Energiespeicher in der Nähe der oberen rechten gestrichelten beziehungsweise gestrichpunkteten Kurve gefahren. Wenn eine Anfrage nach positiver Regelleistung durch eine negative Frequenzabweichung Δf festgestellt wird, wird dann also sehr frühzeitig eine positive Regelleistung bereitgestellt und auch eine tendenziell höhere Regelleistung, als durch den Netzbetreiber eigentlich gefordert und wie dies durch die durchgezogene mittlere Linie gekennzeichnet ist. Dies führt dazu, dass der Energiespeicher stärker entladen wird, als wenn er gemäß der durchgezogenen mittleren Linie betrieben würde.

Bei einer Anfrage nach negativer Regelleistung, die durch eine positive Frequenzabweichung Δf festgestellt wird, kann bei einem Ausnutzen der zeitlichen Toleranz, also bei der Wahl des Zeitpunkts der Leistungserbringung möglichst spät auf die Anfrage reagiert werden und dann auch nur mit möglichst wenig Energieaufnahme bei niedrigeren Leistungen. Dies führt dazu, dass der Energiespeicher weniger Energie aufnimmt, als wenn er gemäß der durchgezogenen mittleren Linie betrieben würde. In beiden Fällen wird also durch diese erfindungsgemäßen Maßnahmen erreicht, dass der Ladezustand des Energiespeichers sich nach einem Regelzyklus näher bei dem gewünschten mittleren Ladezustand befindet, als wenn er wie herkömmlich entlang der durchgezogenen Linie betrieben würde.

Wenn der Energiespeicher relativ niedrig geladen ist, das heißt, der Ladezustand des Energiespeichers sich im unteren Bereich, also beispielsweise zwischen 10 % und 25 % der maximalen Ladung des Energiespeichers befindet, so wird der Energiespeicher in der Nähe der unteren linken gestrichelten beziehungsweise gestrichpunkteten Kurve gefahren. Wenn eine Anfrage nach positiver Regelleistung durch eine negative Frequenzabweichung Δf festgestellt wird, wird dann also sehr spät eine positive Regelleistung bereitgestellt und auch eine tendenziell geringere Regelleistung, als durch den Netzbetreiber eigentlich gefordert und wie dies durch die durchgezogene mittlere Linie gekennzeichnet ist. Dies führt dazu, dass der Energiespeicher weniger entladen wird, als wenn er gemäß der durchgezogenen mittleren Linie betrieben würde.

Bei einer Anfrage nach negativer Regelleistung, die durch eine positive Frequenzabweichung Δf festgestellt wird, wird dagegen möglichst früh auf die Anfrage reagiert und dann auch mit einer höheren Energieaufnahme bei höheren Leistungen. Dies führt dazu, dass der Energiespeicher mehr Energie aufnimmt, als wenn er gemäß der durchgezogenen mittleren Linie betrieben würde. Auch in diesen beiden Fällen wird also durch das erfindungsgemäße Verfahren erreicht, dass der Ladezustand des Energiespeichers sich nach einem Regelzyklus näher bei dem gewünschten mittleren Ladezustand befindet, als wenn er wie herkömmlich entlang der durchgezogenen Linie betrieben würde.

Im statistischen Mittel muss bei der Verwendung eines erfindungsgemäßen Verfahrens eine geringere Kapazität des Energiespeichers bereitgehalten werden, als bei einem herkömmlichen Verfahren. Da Energiespeicher mit größeren Kapazitäten teurer sind, als solche mit geringerer Kapazität, können hierdurch Kosten eingespart werden und es werden weniger Ressourcen beim Aufbau verbraucht. Alternativ kann mit einem gleich dimensionierten Energiespeicher eine größere Regelleistung bereitgestellt werden, sofern die Leistungselektronik angepasst wird oder diese ausreicht.

Besonders geeignet sind für erfindungsgemäße Verfahren galvanische Elemente, insbesondere Akkumulatoren, ganz besonders bevorzugt Lithium-Ionen-Akkumulatoren, da diese sehr schnell reagieren können und daher die gegebenen Toleranzen besonders gut ausnutzen können. Langsamere Energiespeicher, wie beispielsweise Wasserstoffspeicher und Brennstoffzellen oder Gaskraftwerke mit Erdgaserzeugern und Erdgasspeichern brauchen eine gewisse Zeit, um die Leistung bereitstellen zu können. Durch diese Trägheit können die Toleranzen, insbesondere die zeitlichen Toleranzen nicht so gut ausgenutzt werden. Zudem ist die Kapazität dieser Energiespeicher im Vergleich zu anderen Komponenten nicht so kostspielig wie bei Akkumulatoren oder Schwungrädern, so dass der Nutzen bei der Anwendung eines erfindungsgemäßen Verfahrens auch nicht so groß ist.

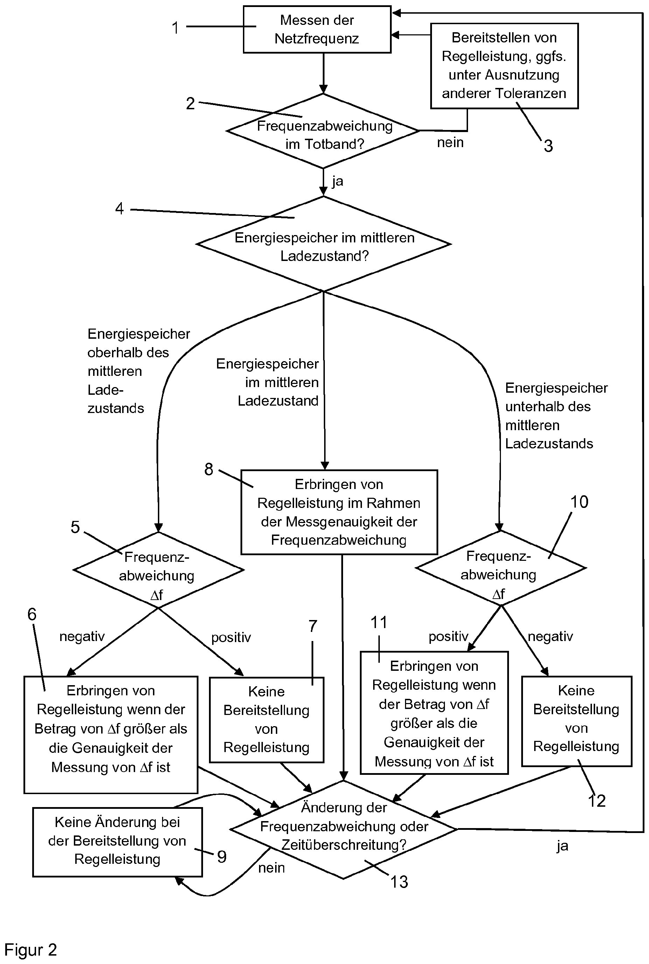

Figur 2 zeigt ein beispielhaftes Ablaufdiagramm für ein erfindungsgemäßes Verfahren. Hierbei beginnt der Kreislauf mit dem Verfahrensschritt 1 bei dem die Netzfrequenz eines Stromnetzes gemessen wird. In Entscheidungsschritt 2 wird geprüft, ob eine Frequenzabweichung innerhalb des Totbands (beispielsweise im Bereich ± 10 mHz) vorliegt oder nicht (also außerhalb des Totbands). Wenn ein Bedarf an Regelleistung durch Messen der Frequenzabweichung Δf von der Sollfrequenz außerhalb des Totbands gemessen wird, wird im Verfahrensschritt 3 Regelleistung zur Verfügung gestellt, gegebenenfalls unter Ausnutzung anderer Toleranzen, um den Ladezustand eines Energiespeichers zur Bereitstellung von Regelleistung anzupassen. Wenn sich die Frequenzabweichung innerhalb des Totbands befindet, wird in einem darauffolgenden Entscheidungsschritt 4 der Ladezustand des Energiespeichers überprüft, um festzustellen, ob der Energiespeicher sich in dem Bereich eines gewünschten mittleren Ladezustands befindet oder nicht.

Falls dies der Fall ist, kommt es in einem Verfahrensschritt 8 zu einer Bereitstellung von Regelleistung im Rahmen der Messgenauigkeit der Frequenzabweichung durch den Energiespeicher. Für das Beispiel einer Messgenauigkeit von ± 4 mHz der Frequenzabweichung würde das dazu führen, dass bei einer Frequenzabweichung von - 10 mHz bis - 4 mHz und von + 4 mHz bis + 10 mHz Regelleistung antiproportional der Frequenzabweichung erbracht würde, während innerhalb der Bandbreite von - 4 mHz bis + 4 mHz keine Regelleistung erbracht würde. In Verfahrensschritt 8 würde also eine Bandbreite beziehungsweise ein variables Totband von - 4 mHz bis + 4 mHz gewählt werden. Allgemeiner kann beispielsweise bei einer Messgenauigkeit von ± x mHz (0 < x < 10 mHz) der Frequenzabweichung eine Bandbreite von - x mHz bis + x mHz gewählt werden.

Falls im Entscheidungsschritt 3 hingegen festgestellt wird, dass der Ladezustand des Energiespeichers sich oberhalb des mittleren Ladezustands des Energiespeichers befindet, wird in einem Entscheidungsschritt 5 geprüft, ob eine positive oder negative Frequenzabweichung Δf von der Sollfrequenz vorliegt.

Im Falle einer positiven Frequenzabweichung Δf bei einem Ladezustand des Energiespeichers oberhalb des mittleren Ladezustands des Energiespeichers wird in einem Verfahrensschritt 7 keine Regelleistung bereitgestellt, da der Energiespeicher nicht noch weiter geladen werden soll. Wenn eine negative Frequenzabweichung Δf bei einem Ladezustand des Energiespeichers oberhalb des mittleren Ladezustands des Energiespeichers festgestellt wird, wird in Verfahrensschritt 6 nur dann keine Regelleistung bereitgestellt, wenn der Betrag der Frequenzabweichung Δf kleiner als die Genauigkeit der Messung der Frequenzabweichung Δf ist, beziehungsweise positiv formuliert wird in Verfahrensschritt 6 nur dann eine Regelleistung bereitgestellt, wenn der Betrag der gemessenen Frequenzabweichung Δf größer als die Genauigkeit der Messung der Frequenzabweichung Δf ist. Durch diese Vorgehensweise wird die Bandbreite beziehungsweise das variable Totband beziehungsweise deren Grenzen definiert.

Falls im Entscheidungsschritt 3 festgestellt wird, dass der Ladezustand des Energiespeichers sich unterhalb des mittleren Ladezustands des Energiespeichers befindet, wird in einem Entscheidungsschritt 10 geprüft, ob eine positive oder negative Frequenzabweichung Δf von der Sollfrequenz vorliegt.

Im Falle einer negativen Frequenzabweichung Δf bei einem Ladezustand des Energiespeichers unterhalb des mittleren Ladezustands des Energiespeichers wird in einem Verfahrensschritt 12 keine Regelleistung bereitgestellt, da der Energiespeicher nicht noch weiter entladen werden soll. Wenn eine positive Frequenzabweichung Δf bei einem Ladezustand des Energiespeichers unterhalb des mittleren Ladezustands des Energiespeichers festgestellt wird, wird in Verfahrensschritt 11 nur dann keine Regelleistung bereitgestellt, wenn der Betrag der Frequenzabweichung Δf kleiner als die Genauigkeit der Messung der Frequenzabweichung Δf ist, beziehungsweise positiv formuliert wird in Verfahrensschritt 6 nur dann eine Regelleistung bereitgestellt, wenn der Betrag der gemessenen Frequenzabweichung Δf größer als die Genauigkeit der Messung der Frequenzabweichung Δf ist. Durch diese Vorgehensweise wird die Bandbreite beziehungsweise das variable Totband beziehungsweise deren Grenzen definiert.

In einem Entscheidungsschritt 13 wird schließlich geprüft, ob eine Änderung der Frequenzabweichung stattgefunden hat oder ob ein Zeitlimit überschritten wird. Falls dies nicht der Fall ist, wird keine Änderung der Regelleistung vorgenommen, also die bisherige Regelleistung in Verfahrensschritt 9 bereitgestellt und in Entscheidungsschritt 13 weiter geprüft, ob eine Änderung der Frequenzabweichung stattgefunden hat oder ob ein Zeitlimit überschritten wird.

Falls sich eine Änderung der Frequenzabweichung ergeben hat oder das Zeitlimit überschritten wird, wird rekursiv mit Verfahrensschritt 1 fortgefahren. Das Zeitlimit wird so gewählt, dass sich innerhalb des Zeitlimits der Ladezustand des Energiespeichers nennenswert ändert, beispielsweise um zumindest 0,5 % der maximal aufnehmbaren Energiemenge. Es wäre genauso gut möglich, die Schritte 13 und 9 weg zu lassen und stattdessen nach den Schritten 6, 7, 11 und 12 immer wieder mit Schritt 1 fortzufahren, um ein erfindungsgemäßes Verfahren zu realisieren.

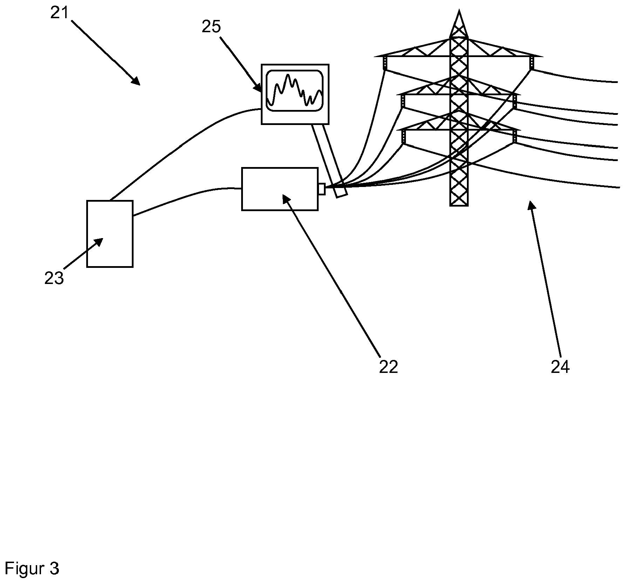

Figur 3 zeigt in schematischer Ansicht eine erfindungsgemäße Vorrichtung 21 umfassend einen Energiespeicher 22. Ein Leitsystem 23 ist als Steuerung mit dem Energiespeicher 22 verbunden, so dass das Leitsystem 23 die Leistungsaufnahme und -abgabe des Energiespeichers 22 einstellen kann.

Der Energiespeicher 22 ist an ein Stromnetz 24 angeschlossen und kann Leistung aus dem Stromnetz 24 aufnehmen und/oder abgeben. Das Leitsystem 23 ist mit einer Vorrichtung 25 zum Messen der Abweichung zwischen aktueller Netzfrequenz und dem Sollwert der Netzfrequenz (in Europa 50,000 Hz) des Stromnetzes 24 verbunden, um festzustellen, ob eine Regelleistung erbracht werden muss oder nicht. Wenn eine Änderung der Frequenzabweichung gemessen wird, sich also der Bedarf an Regelleistung - positiver oder negativer Regelleistung - ändert, bewirkt das Leitsystem 23, dass die Regelleistung des Energiespeichers 22 angepasst wird. Das Leitsystem 23 regelt also die bereitgestellte Regelleistung.

Die Vorrichtung 25 ist dazu in der Lage, die Frequenzabweichung der Netzfrequenz genauer als gefordert zu bestimmen. So können die Toleranzen bei der Bestimmung der Netzfrequenz und das Totband dazu genutzt werden, den Ladezustand des Energiespeichers 22 einzustellen.

Der Ladezustand des Energiespeichers 22 kann über eine geeignete Messeinrichtung durch das Leitsystem 23 bestimmt werden, um ein erfindungsgemäßes Verfahren umzusetzen.

Das Leitsystem 23 kann den Energiespeicher 22 dabei so laden oder entladen, dass ein bestimmter gewünschter Ladezustand angestrebt wird. Dazu wird die Wahl der Grenzen der Bandbreite beziehungsweise des variablen Totbands innerhalb des vom Netzbetreiber vorgegebenen Totbands genutzt. Es wird zur Ladezustandsanpassung also Regelleistung im vom Netzbetreiber vorgegebenen Totband erbracht.

Ferner können Toleranzen bei der Frequenzabweichung, ab der eine Regelleistung erbracht werden soll, Toleranzen bei dem Betrag der bei einer bestimmten Frequenzabweichung zu erbringenden Regelleistung und Toleranzen bei dem Zeitpunkt der Regelleistungserbringung, beziehungsweise Toleranzen bei der Bestimmung der Frequenzabweichung, sowie Toleranzen bei der maximal zu erbringenden präqualifizierten Regelleistung dazu genutzt werden, den Ladezustand des Energiespeichers 22 in die gewünschte Richtung zu entwickeln. So kann zum Beispiel eine Übererfüllung von bis zu 20% über die maximale Regelleistung hinaus, beispielsweise in Form eines Überschwingens, durch den Energiespeicher 22 erzeugt werden, um den Ladezustand des Energiespeichers 22 zu regeln. Insbesondere auch in solchen Fällen ist ein besonders schnell reagierender und leicht auf- und entladbarer Energiespeicher 22 besonders vorteilhaft. Am besten sind hierfür Akkumulatoren geeignet. Insbesondere Li-Ionen Akkumulatoren sind ohne schädliche Einflüsse auf den Akkumulator schnell und häufig auf- und entladbar, so dass diese erfindungsgemäß für alle Ausführungsbeispiele besonders geeignet und bevorzugt sind. Dazu müssen Li-Ionen Akkumulatoren mit beträchtlicher Kapazität bereitgestellt werden. Diese sind beispielsweise leicht in einem oder mehreren 40-Fuß-ISO-Containern unterzubringen.

Eine erfindungsgemäße Vorrichtung 21 ist vor allem als Primärregelleistungsquelle aber auch als Sekundärregelleistungsquelle besonders gut geeignet.

Für Einzelheiten zur Regelung von Regelleistung und zum Informationsaustausch mit den Netzbetreibern sei auf das Forum Netztechnik/Netzbetrieb im VDE (FNN) "TransmissionCode 2007" vom November 2009 verwiesen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- P: Leistung
- t: Zeit
- 2; 4; 5; 13: Entscheidungsschritt
- 1; 3; 6; 7; 8; 9; 10; 11; 12: Verfahrensschritt
- 21: Vorrichtung zum Bereitstellen von Regelleistung
- 22: Energiespeicher
- 23: Leitsystem / Steuerung
- 24: Stromnetz
- 25: Vorrichtung zum Bestimmen der Frequenzabweichung

## Patentansprüche

1. Verfahren zur Bereitstellung von Regelleistung für ein Stromnetz (24), bei dem zumindest ein an das Stromnetz (24) angeschlossener Energiespeicher (22) in Abhängigkeit von einer Frequenzabweichung von einer Sollfrequenz des Stromnetzes (24) dem Stromnetz (24) Energie zuführt und/oder aus dem Stromnetz (24) Energie aufnimmt, wobei vom Betreiber des Stromnetzes und/oder von Behörden ein Totband um die Sollfrequenz vorgegeben wird, innerhalb dessen keine Regelleistung erbracht werden muss; **dadurch gekennzeichnet, dass**
die Frequenzabweichung von der Netzfrequenz mit einer höheren Genauigkeit als der Breite des Totbands gemessen wird und eine Bandbreite innerhalb des Totbands in Abhängigkeit von einem Ladezustand des Energiespeichers (22) gewählt wird, wobei die Lage der Bandbreite asymmetrisch zur Frequenzabweichung von 0mHz gewählt wird, und wobei außerhalb der Bandbreite Regelleistung bereitgestellt wird.

2. Verfahren nach Anspruch 1, **dadurch gekennzeichnet, dass**
die Bandbreite in Abhängigkeit vom Ladezustand, insbesondere vom aktuellen Ladezustand, des Energiespeichers (22) kleiner als die Breite des Totbands gewählt wird, wenn der Ladezustand von einem mittleren Ladezustand abweicht, wobei vorzugsweise als der mittlere Ladezustand derjenige halbgeladene Ladezustand definiert wird, bei dem der Energiespeicher (22) in etwa die Hälfte des maximal möglichen Energiegehalts enthält, insbesondere zwischen 40% und 60% des maximal möglichen Energiegehalts, oder als der mittlere Ladezustand ein Ladezustandsbereich im Bereich des halbgeladenen Ladezustands definiert wird, besonders bevorzugt umfassend den halbgeladenen Ladezustand, insbesondere zwischen 20% und 80% des maximal möglichen Energiegehalts, ganz besonders bevorzugt zwischen 30% und 70% des maximal möglichen Energiegehalts.

3. Verfahren nach Anspruch 1 oder 2, **dadurch gekennzeichnet, dass**
für zumindest einen Ladezustand des Energiespeichers (22) die Bandbreite bis zur Genauigkeit der Messung der Frequenzabweichung reduziert wird.

4. Verfahren nach einem der vorangehenden Ansprüche, **dadurch gekennzeichnet, dass**
durch die Wahl der Bandbreite und die Bereitstellung von Regelleistung im Totband der Ladezustand des Energiespeichers angepasst wird, vorzugsweise ein mittlerer Ladezustand angestrebt wird.

5. Verfahren nach einem der Ansprüche 2 bis 4, **dadurch gekennzeichnet, dass**
eine der Grenzen der Bandbreite als diejenige Frequenzabweichung von der Sollfrequenz definiert wird, die durch die Genauigkeit der Messung festgelegt wird, oder eine der Grenzen der Bandbreite durch die Sollfrequenz definiert wird oder durch eine Frequenzabweichung zwischen diesen Werten, wobei die untere Grenze der Bandbreite derart definiert wird, wenn der Ladezustand des Energiespeichers (22) reduziert werden soll, insbesondere der Ladezustand oberhalb des mittleren Ladezustands liegt, und/oder die obere Grenze der Bandbreite derart definiert wird, wenn der Ladezustand des Energiespeichers (22) erhöht werden soll, insbesondere der Ladezustand unterhalb des mittleren Ladezustands liegt.

6. Verfahren nach einem der vorangehenden Ansprüche, **dadurch gekennzeichnet, dass**
die Bandbreite aus zwei oder mehr vorherbestimmten Bandbreiten ausgewählt wird, wobei verschiedenen Ladungszuständen, vorzugsweise jedem Ladezustand des Energiespeichers (22) oder verschiedenen Bereichen des Ladezustands vorzugsweise jedem Bereich des Ladezustands vorherbestimmten Bandbreiten zugeordnet werden.

7. Verfahren nach einem der vorangehenden Ansprüche, **dadurch gekennzeichnet, dass**
die Bandbreite proportional einer Ladezustandsdifferenz des aktuellen Ladezustands des Energiespeichers vom mittleren Ladezustand gewählt wird, insbesondere die Bandbreite linear von der Ladezustandsdifferenz des aktuellen Ladezustands vom mittleren Ladezustand abhängt.

8. Verfahren nach einem der vorangehenden Ansprüche, **dadurch gekennzeichnet, dass**
der Ladezustand des Energiespeichers gemessen wird, insbesondere kontinuierlich gemessen wird, wobei die vom Energiespeicher ans Stromnetz abgegebene Regelleistung in Abhängigkeit vom Ladezustand geregelt wird.

9. Verfahren nach einem der vorangehenden Ansprüche, **dadurch gekennzeichnet, dass**
außerhalb der Bandbreite Regelleistung wie vom Stromnetzbetreiber gewünscht bereitgestellt wird und/oder der Betrag der Regelleistung bezüglich der Frequenzabweichung bereichsweise antiproportional zur Frequenzabweichung der Netzfrequenz erbracht wird, vorzugsweise linear zur Frequenzabweichung.

10. Verfahren nach einem der vorangehenden Ansprüche, **dadurch gekennzeichnet, dass**
innerhalb der Bandbreite keine Leistung aus dem Energiespeicher ins Stromnetz abgegeben wird und keine Leistung aus dem Stromnetz in den Energiespeicher aufgenommen wird.

11. Verfahren nach einem der vorangehenden Ansprüche, **dadurch gekennzeichnet, dass**
die Frequenzabweichung mit einer Genauigkeit von zumindest ± 8 mHz, besonders bevorzugt von zumindest ± 4 mHz, ganz besonders bevorzugt von zumindest ± 2 mHz, speziell bevorzugt von zumindest ± 1 mHz gemessen wird.

12. Verfahren nach einem der vorangehenden Ansprüche, **dadurch gekennzeichnet, dass**
bei einer Änderung der benötigten Regelleistung der Zeitpunkt nach der Änderung, ab dem vom Energiespeicher (22) eine Regelleistung bereitgestellt wird, in Abhängigkeit vom aktuellen Ladezustand des Energiespeichers (22) gewählt wird.

13. Verfahren nach Anspruch 12, **dadurch gekennzeichnet, dass**
der Zeitpunkt in einem Zeitintervall zwischen der Änderung der benötigten Regelleistung und einer maximalen Zeit nach der Änderung liegt, wobei insbesondere das Zeitintervall im Falle einer Bereitstellung von Primärregelleistung 30 Sekunden beträgt.

14. Verfahren nach einem der vorangehenden Ansprüche, **dadurch gekennzeichnet, dass**
im Totband keine negative Regelleistung aus dem Stromnetz (24) aufgenommen wird, wenn der Ladezustand des Energiespeichers (22) oberhalb eines ersten Grenzwerts liegt und/oder im Totband keine positive in das Stromnetz (24) eingespeist wird, wenn der Ladezustand des Energiespeichers (22) unterhalb eines zweiten Grenzwerts liegt, wobei die beiden Grenzwerte bevorzugt den mittleren Ladezustandsbereich definieren.

15. Verfahren nach einem der vorangehenden Ansprüche, **dadurch gekennzeichnet, dass**
als Energiespeicher (22) ein Schwungrad, ein Wärmespeicher, ein Wasserstofferzeuger und -speicher mit Brennstoffzelle, ein Erdgaserzeuger mit Gaskraftwerk, ein Pumpspeicherkraftwerk, ein Druckluftspeicherkraftwerk, ein supraleitender magnetischer Energiespeicher, ein Redox-Flow-Element und/oder ein galvanisches Element verwendet wird, vorzugsweise ein Akkumulator und/oder ein Batteriespeicherkraftwerk.

16. Verfahren nach Anspruch 15, **dadurch gekennzeichnet, dass**
als Energiespeicher (22) ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren verwendet wird.

17. Verfahren nach einem der vorangehenden Ansprüche, **dadurch gekennzeichnet, dass**
der Energiespeicher (22) eine Kapazität von zumindest 4 kW h, bevorzugt zumindest 10 kW h, besonders bevorzugt zumindest 50 kW h, ganz besonders bevorzugt zumindest 250 kW h besitzt.

18. Verfahren nach einem der vorangehenden Ansprüche, **dadurch gekennzeichnet, dass**
der Energiespeicher (22) gemeinsam mit zumindest einem Energieerzeuger und/oder zumindest einem Energieverbraucher für die Bereitstellung von Regelleistung für das Stromnetz (24) betrieben wird.

19. Verfahren nach Anspruch 18, **dadurch gekennzeichnet, dass**
eine Regelung und/oder Steuerung des Energiespeichers (22) in Abhängigkeit und in Wirkverbindung mit dem zumindest einen Energieerzeuger und/oder mit dem zumindest einen Energieverbraucher bei der Bereitstellung von Regelleistung für ein Stromnetz (24) betrieben wird.

20. Verfahren nach einem der vorangehenden Ansprüche, **dadurch gekennzeichnet, dass**
eine Toleranz bezüglich der Frequenzabweichung von der Sollfrequenz des Stromnetzes (24) genutzt wird, um den Ladezustand des Energiespeichers (22) gleichzeitig mit der Bereitstellung der Regelleistung durch den Energiespeicher (22) einzustellen.

21. Verfahren nach einem der vorangehenden Ansprüche, **dadurch gekennzeichnet, dass**
die Toleranz bezüglich des Betrags der bereitgestellten Regelleistung genutzt wird, um den Ladezustand des Energiespeichers (22) gleichzeitig mit der Bereitstellung der Regelleistung durch den Energiespeicher (22) einzustellen, wobei vorzugsweise zur Nutzung der Toleranz bezüglich des Betrags der bereitgestellten Regelleistung der Betrag der angeforderten Regelleistung überschritten wird, insbesondere um maximal 30 % und/oder um 10 MW, besonders bevorzugt um maximal 20 % und/oder um 5 MW, wobei besonders bevorzugt die prozentuale Überschreitung des Betrags der angeforderten Regelleistung proportional der Abweichung des Ladezustands des Energiespeichers (22) von dem mittleren Ladezustand gewählt wird.

22. Verfahren nach einem der Ansprüche 20 oder 21, **dadurch gekennzeichnet, dass**
der Ladezustand des Energiespeichers (22) dadurch eingestellt wird, dass für den Fall, in dem der Ladezustand des Energiespeichers (22) oberhalb eines ersten Grenzwerts liegt, der Energiespeicher (22) eine innerhalb der Toleranz oder der Toleranzen liegende größere Regelleistung in das Stromnetz (24) einspeist oder eine innerhalb der Toleranz oder der Toleranzen liegende kleinere Regelleistung aus dem Stromnetz (24) aufnimmt und/oder für den Fall, in dem der Ladezustand des Energiespeichers (22) unterhalb eines zweiten Grenzwerts liegt, der Energiespeicher (22) eine innerhalb der Toleranz oder der Toleranzen liegende kleinere Regelleistung in das Stromnetz (24) einspeist oder eine innerhalb der Toleranz oder der Toleranzen liegende größere Regelleistung aus dem Stromnetz (24) aufnimmt.

23. Verfahren nach einem der vorangehenden Ansprüche, **dadurch gekennzeichnet, dass**
ein Regelleistungsgradient in Abhängigkeit vom Ladezustand des Energiespeichers (22) gewählt wird, wobei insbesondere der zeitliche Verlauf des Betrags der Regelleistung eingestellt und die Toleranz des Betrags der bereitzustellenden Regelleistung über die Zeit genutzt wird.

24. Verfahren nach einem der vorangehenden Ansprüche, **dadurch gekennzeichnet, dass**
bei einer Änderung der Frequenzabweichung um weniger als einen Unempfindlichkeitsbereich, insbesondere um weniger als 10 mHz, eine veränderte Regelleistung nur erbracht wird, um den Ladezustand des Energiespeichers (22) einzustellen, insbesondere die veränderte Regelleistung nur dann erbracht wird, wenn sich der Ladezustand des Energiespeichers (22) dadurch möglichst stark zum mittleren Ladezustand hin oder möglichst wenig vom mittleren Ladezustand weg lädt oder entlädt.

25. Vorrichtung zum Durchführen eines Verfahrens nach einem der vorangehenden Ansprüche, **dadurch gekennzeichnet, dass**
die Vorrichtung (21) zumindest einen Energiespeicher (22) und eine Steuerung (23) zum Steuern und/oder Regeln der Regelleistung des Energiespeichers (22) umfasst, wobei der Energiespeicher (22) derart an ein Stromnetz (24) angeschlossen ist, dass durch die Vorrichtung Energie in das Stromnetz (24) einspeisbar und aus dem Stromnetz (24) entnehmbar ist, wobei
die Vorrichtung (21) eine Vorrichtung zum Messen des Ladezustands des zumindest einen Energiespeichers (22) und/oder eine Vorrichtung zum Messen der Frequenzabweichung der Netzfrequenz von der Sollfrequenz und einen Datenspeicher umfasst, wobei in dem Datenspeicher zumindest eine Bandbreite und/oder der mittlere Ladezustand des Energiespeichers (22) gespeichert ist, wobei die Steuerung (23) auf den Datenspeicher Zugriff hat und dazu ausgelegt ist, in Abhängigkeit von dem Ladezustand des Energiespeichers (22) und/oder von der Frequenzabweichung die vom Energiespeicher (22) abgegebene und aufgenommene Regelleistung zu steuern, wobei
der Energiespeicher (22) ein Akkumulator ist, vorzugsweise ein Lithium-Ionen-Akkumulator, ein Blei-Schwefelsäure-Akkumulator, ein Nickel-Cadmium-Akkumulator, ein Natriumsulfid-Akkumulator und/oder ein Li-Ionen-Akkumulator und/oder ein Verbund aus zumindest zwei dieser Akkumulatoren ist.

## Claims

1. Method for providing control power for an electricity network (24) in which at least one energy store (22) connected to the electricity network (24) supplies energy to the electricity network (24) and/or takes up energy from the electricity network (24) in dependence on a frequency deviation from a desired frequency of the electricity network (24), a deadband around the desired frequency, within which no control power must be delivered, being prescribed by the operator of the electricity network and/or by authorities, **characterized in that**
the frequency deviation from the network frequency is measured with a greater accuracy than the width of the deadband and a bandwidth within the deadband is chosen in dependence on a charging state of the energy store (22), with the position of the bandwidth being chosen asymmetrically to the frequency deviation of 0 mHz, and with control power being provided outside the bandwidth.

2. Method according to Claim 1, **characterized in that** in dependence on the charging state, in particular the charging state at the given time, of the energy store (22), the bandwidth is chosen to be less than the width of the deadband if the charging state deviates from a medium charging state, the semi-charged charging state at which the energy store (22) contains approximately half of the maximum possible energy content, in particular between 40% and 60% of the maximum possible energy content, preferably being defined as the medium charging state, or a charging state range in the region of the semi-charged charging state, particularly preferably comprising the semi-charged charging state, in particular between 20% and 80% of the maximum possible energy content, most particularly preferably between 30% and 70% of the maximum possible energy content, being defined as the medium charging state.

3. Method according to Claim 1 or 2, **characterized in that**
for at least one charging state of the energy store (22), the bandwidth is reduced to the accuracy of the measurement of the frequency deviation

4. Method according to one of the preceding claims, **characterized in that**
the charging state of the energy store is adapted, preferably a medium charging state is aimed for, by the choice of the bandwidth and the provision of control power in the deadband.

5. Method according to one of Claims 2 to 4, **characterized in that**
one of the limits of the bandwidth is defined as that frequency deviation from the desired frequency that is established by the accuracy of the measurement, or one of the limits of the bandwidth is defined by the desired frequency or by a frequency deviation between these values, the lower limit of the bandwidth being defined in this way if the charging state of the energy store (22) is to be reduced, in particular the charging state lies above the medium charging state, and/or the upper limit of the bandwidth being defined in this way if the charging state of the energy store (22) is to be increased, in particular the charging state lies below the medium charging state.

6. Method according to one of the preceding claims, **characterized in that**
the bandwidth is selected from two or more predetermined bandwidths, various states of charge, preferably every charging state of the energy store (22) or various ranges of the charging state, preferably every range of the charging state, being assigned predetermined bandwidths.

7. Method according to one of the preceding claims, **characterized in that**
the bandwidth is chosen in proportion to a difference in charging state of the charging state at the given time of the energy store from the medium charging state, in particular the bandwidth depends linearly on the difference in the charging state of the charging state at the given time from the medium charging state.

8. Method according to one of the preceding claims, **characterized in that**
the charging state of the energy store is measured, in particular measured continuously, the control power delivered by the energy store to the electricity network being controlled in dependence on the charging state.

9. Method according to one of the preceding claims, **characterized in that**,
outside the bandwidth, control power is provided as desired by the network operator and/or the amount of the control power is delivered with respect to the frequency deviation in certain regions in inverse proportion to the frequency deviation of the network frequency, preferably linearly to the frequency deviation.

10. Method according to one of the preceding claims, **characterized in that**,
within the bandwidth, no power is delivered from the energy store into the electricity network and no power is taken up from the electricity network into the energy store.

11. Method according to one of the preceding claims, **characterized in that**
the frequency deviation is measured with an accuracy of at least ± 8 mHz, particularly preferably of at least ± 4 mHz, most particularly preferably of at least ± 2 mHz, especially preferably of at least ± 1 mHz.

12. Method according to one of the preceding claims, **characterized in that**,
when there is a change of the required control power, the time after the change from which control energy is provided by the energy store (22) is chosen in dependence on the charging state at the given time of the energy store (22).

13. Method according to Claim 12, **characterized in that**
the time lies in a time interval between the change of the required control power and a maximum time after the change, the time interval particularly being 30 seconds in the case of provision of primary control power.

14. Method according to one of the preceding claims, **characterized in that**
in the deadband no negative control power is taken up from the electricity network (24) if the charging state of the energy store (22) lies above a first limit value and/or in the deadband no positive control energy is fed into the electricity network (24) if the charging state of the energy store (22) lies below a second limit value, the two limit values preferably defining the medium charging state range.

15. Method according to one of the preceding claims, **characterized in that**
a flywheel, a heat store, a hydrogen generator and store with a fuel cell, a natural gas generator with a gas-fired power plant, a pumped storage power plant, a compressed-air storage power plant, a superconducting magnetic energy store, a redox-flow element and/or a galvanic element, preferably a rechargeable battery and/or a battery storage power plant, is used as the energy store (22).

16. Method according to Claim 15, **characterized in that**
a lithium-ion battery, a lead-sulphuric acid battery, a nickel-cadmium battery, a sodium-sulphide battery and/or a Li-ion battery and/or a combination of at least two of these rechargeable batteries is used as the energy store (22).

17. Method according to one of the preceding claims, **characterized in that**
the energy store (22) has a capacity of at least 4 kWh, preferably at least 10 kWh, particularly preferably at least 50 kWh, most particularly preferably at least 250 kWh.

18. Method according to one of the preceding claims, **characterized in that**
the energy store (22) is operated jointly with at least one energy generator and/or at least one energy consuming entity for the provision of control power for the electricity network (24).

19. Method according to Claim 18, **characterized in that**
a closed-loop control and/or open-loop control of the energy store (22) is operated in dependence on and in operative connection with the at least one energy generator and/or with the at least one energy consuming entity in the provision of control power for an electricity network (24).

20. Method according to one of the preceding claims, **characterized in that**
a tolerance with respect to the frequency deviation from the desired frequency of the electricity network (24) is used in order to set the charging state of the energy store (22) at the same time as providing the control power by the energy store (22).

21. Method according to one of the preceding claims, **characterized in that**
the tolerance with respect to the amount of the control power provided is used in order to set the charging state of the energy store (22) at the same time as providing the control power by the energy store (22), preferably the amount of the requested control power being exceeded, in particular by a maximum of 30% and/or by 10 MW, particularly preferably by a maximum of 20% and/or by 5 MW, to make use of the tolerance with respect to the amount of the control power provided, the percentage by which the amount of the requested control power is exceeded being chosen particularly preferably in proportion to the deviation of the charging state of the energy store (22) from the medium charging state.

22. Method according to either of Claims 20 and 21, **characterized in that**
the charging state of the energy store (22) is set by the energy store (22) feeding into the electricity network (24) a greater control power, lying within the tolerance or the tolerances, or taking up from the electricity network (24) a smaller control power, lying within the tolerance or the tolerances, in the case where the charging state of the energy store (22) lies above a first limit value, and/or the energy store (22) feeding into the electricity network (24) a smaller control power, lying within the tolerance or the tolerances, or taking up from the electricity network (24) a greater control power, lying within the tolerance or the tolerances, in the case where the charging state of the energy store (22) lies below a second limit value.

23. Method according to one of the preceding claims, **characterized in that**
a control power gradient is chosen in dependence on the charging state of the energy store (22), the variation over time of the amount of the control power being particularly set and the tolerance of the amount of the control power to be provided over time being used.

24. Method according to one of the preceding claims, **characterized in that**,
when there is a change of the frequency deviation by less than a range of insensitivity, in particular by less than 10 mHz, a changed control power is delivered only to set the charging state of the energy store (22), in particular the changed control power is delivered only if the charging state of the energy store (22) is thereby charged or discharged as strongly as possible towards the medium charging state or as little as possible away from the medium charging state.

25. Device for carrying out a method according to one of the preceding claims, **characterized in that**
the device (21) comprises at least one energy store (22) and a control system (23) for controlling the control power of the energy store (22) in an open-loop or closed-loop manner, the energy store (22) being connected to an electricity network (24) in such a way that energy can be fed into the electricity network (24) and can be removed from the electricity network (24) by the device,
wherein
the device (21) comprises a device for measuring the charging state of the at least one energy store (22) and/or a device for measuring the frequency deviation of the network frequency from the desired frequency and a data memory, at least a bandwidth and/or the medium charging state of the energy store (22) being stored in the data memory, the control system (23) having access to the data memory and being designed for controlling the control power delivered and taken up by the energy store (22) in dependence on the charging state of the energy store (22) and/or on the frequency deviation,
wherein
the energy store (22) is a rechargeable battery, preferably a lithium-ion battery, a lead-sulphuric acid battery, a nickel-cadmium battery, a sodium-sulphide battery and/or a Li-ion battery and/or a combination of at least two of these rechargeable batteries.

## Revendications

1. Procédé pour fournir une puissance de régulation pour un réseau électrique (24), dans lequel au moins un accumulateur d'énergie (22) connecté au réseau électrique (24) achemine de l'énergie au réseau électrique (24) en fonction d'un écart de fréquence par rapport à une fréquence de consigne du réseau électrique (24) et/ou prélève de l'énergie à partir du réseau électrique (24), l'exploitant du réseau électrique et/ou des autorités prédéfinissant autour de la fréquence de consigne une bande morte à l'intérieur de laquelle il n'est pas nécessaire de dispenser une puissance de régulation ; **caractérisé en ce que** l'écart de fréquence par rapport à la fréquence de réseau est mesuré avec une précision plus élevée que la largeur de la bande morte, et une largeur de bande à l'intérieur de la bande morte est choisie en fonction d'un état de charge de l'accumulateur d'énergie (22), la position de la largeur de bande étant choisie de façon asymétrique par rapport à l'écart de fréquence de 0 mHz, et une puissance de régulation étant fournie à l'extérieur de la largeur de bande.

2. Procédé selon la revendication 1, **caractérisé en ce que**
la largeur de bande en fonction de l'état de charge, en particulier de l'état de charge actuel, de l'accumulateur d'énergie (22) est choisie plus petite que la largeur de la bande morte quand l'état de charge s'écarte d'un état de charge moyen, dans lequel c'est de préférence l'état de charge à demi-chargé pour lequel l'accumulateur d'énergie (22) contient environ la moitié de la teneur en énergie possible maximale, en particulier entre 40 % et 60 % de la teneur en énergie possible maximale qui est défini en tant qu'état de charge moyen, ou bien c'est une plage d'état de charge dans la plage de l'état de charge à demi-chargé qui est définie en tant qu'état de charge moyen, comprenant de façon particulièrement préférée l'état de charge à demi-chargé, en particulier entre 20 % et 80 % de la teneur en énergie possible maximale, de façon tout à fait particulièrement préférée entre 30 % et 70 % de la teneur en énergie possible maximale.

3. Procédé selon la revendication 1 ou 2, **caractérisé en ce que**, pour au moins un état de charge de l'accumulateur d'énergie (22), la largeur de bande est réduite jusqu'à la précision de la mesure de l'écart de fréquence.

4. Procédé selon l'une des revendications précédentes, **caractérisé en ce que**
l'état de charge de l'accumulateur d'énergie est adapté par le choix de la largeur de bande et par la fourniture de la puissance de régulation dans la bande morte, un état de charge moyen étant de préférence recherché.

5. Procédé selon l'une des revendications 2 à 4, **caractérisé en ce qu'**une des limites de la largeur de bande est définie comme étant l'écart de fréquence par rapport à la fréquence de consigne qui est stipulé par la précision de la mesure, ou une des limites de la largeur de bande est définie par la fréquence de consigne ou par un écart de fréquence entre ces valeurs, la limite inférieure de la largeur de bande étant définie ainsi quand l'état de charge de l'accumulateur d'énergie (22) doit être réduit, en particulier quand l'état de charge se situe au-dessus de l'état de charge moyen, et/ou la limite supérieure de la largeur de bande étant définie ainsi quand l'état de charge de l'accumulateur d'énergie (22) doit être augmenté, en particulier quand l'état de charge se situe au-dessous de l'état de charge moyen.

6. Procédé selon l'une des revendications précédentes, **caractérisé en ce que**
la largeur de bande est sélectionnée parmi deux largeurs de bande définies au préalable ou davantage, des largeurs de bande définies au préalable étant affectées à différents états de charge, de préférence à chaque état de charge de l'accumulateur d'énergie (22), ou à différentes plages de l'état de charge, de préférence à chaque plage de l'état de charge.

7. Procédé selon l'une des revendications précédentes, **caractérisé en ce que**
la largeur de bande est choisie proportionnellement à une différence d'état de charge de l'état de charge actuel de l'accumulateur d'énergie par rapport à l'état de charge moyen, en particulier la largeur de bande dépend de façon linéaire de la différence d'état de charge de l'état de charge actuel par rapport à l'état de charge moyen.

8. Procédé selon l'une des revendications précédentes, **caractérisé en ce que**
l'état de charge de l'accumulateur d'énergie est mesuré, en particulier est mesuré de façon continue, la puissance de régulation délivrée au réseau électrique par l'accumulateur d'énergie étant régulée en fonction de l'état de charge.

9. Procédé selon l'une des revendications précédentes, **caractérisé en ce que**,
à l'extérieur de la largeur de bande, une puissance de régulation est fournie selon les souhaits de l'exploitant du réseau électrique, et/ou la quantité de la puissance de régulation est dispensée par secteurs, en ce qui concerne l'écart de fréquence, d'une façon anti-proportionnelle à l'écart de fréquence de la fréquence de réseau, de préférence de façon linaire par rapport à l'écart de fréquence.

10. Procédé selon l'une des revendications précédentes, **caractérisé en ce que**,
à l'intérieur de la largeur de bande, aucune puissance n'est délivrée au réseau électrique à partir de l'accumulateur d'énergie, et aucune puissance n'est prélevée à partir du réseau électrique en direction de l'accumulateur d'énergie.

11. Procédé selon l'une des revendications précédentes, **caractérisé en ce que**
l'écart de fréquence est mesuré avec une précision d'au moins ± 8 mHz, de façon particulièrement préférée d'au moins ± 4 mHz, de façon particulièrement préférée d'au moins ± 2 mHz, de façon spécialement préférée d'au moins ± 1 mHz.

12. Procédé selon l'une des revendications précédentes, **caractérisé en ce que**,
en cas de variation de la puissance de régulation nécessaire, le moment qui suit cette variation à partir duquel une puissance de régulation est fournie par l'accumulateur d'énergie (22) est choisi en fonction de l'état de charge actuel de l'accumulateur d'énergie (22) .

13. Procédé selon la revendication 12, **caractérisé en ce que**
le moment se situe dans un intervalle de temps entre la variation de la puissance de régulation nécessaire et une durée maximale après la variation, l'intervalle de temps étant en particulier de 30 secondes dans le cas d'une fourniture d'une puissance de régulation primaire.

14. Procédé selon l'une des revendications précédentes, **caractérisé en ce**
**qu'**aucune puissance de régulation négative n'est prélevée à partir du réseau électrique (24) dans la bande morte quand l'état de charge de l'accumulateur d'énergie (22) se situe au-dessus d'une première valeur limite, et/ou aucune puissance de régulation positive n'est injectée dans le réseau électrique (24) dans la bande morte quand l'état de charge de l'accumulateur d'énergie (22) se situe au-dessous d'une deuxième valeur limite, les deux valeurs limites définissant de préférence la plage d'état de charge moyenne.

15. Procédé selon l'une des revendications précédentes, **caractérisé en ce que**,
en tant qu'accumulateur d'énergie (22), il est utilisé un volant, un accumulateur de chaleur, un générateur et accumulateur d'hydrogène avec pile à combustible, un générateur de gaz naturel avec une centrale à gaz, une centrale de pompage-turbinage, une centrale à accumulateur à air comprimé, un accumulateur d'énergie magnétique supraconducteur, un élément à flux redox et/ou un élément galvanique, de préférence un accumulateur et/ou une centrale à accumulateur à batterie.

16. Procédé selon la revendication 15, **caractérisé en ce que**,
en tant qu'accumulateur d'énergie (22), il est utilisé un accumulateur lithium-ion, un accumulateur plomb-acide sulfurique, un accumulateur nickel-cadmium, un accumulateur sulfure de sodium et/ou un accumulateur Li-ion et/ou un composite d'au moins deux de ces accumulateurs.

17. Procédé selon l'une des revendications précédentes, **caractérisé en ce que**
l'accumulateur d'énergie (22) possède une capacité d'au moins 4 kWh, de préférence d'au moins 10 kWh, de façon particulièrement préférée d'au moins 50 kWh, de façon tout à fait particulièrement préférée d'au moins 250 kWh.

18. Procédé selon l'une des revendications précédentes, **caractérisé en ce que**
l'accumulateur d'énergie (22) est mis en oeuvre conjointement avec au moins un générateur d'énergie et/ou au moins un consommateur d'énergie pour la fourniture de puissance de régulation pour le réseau électrique (24).

19. Procédé selon la revendication 18, **caractérisé en ce**
**qu'**une régulation et/ou une commande de l'accumulateur d'énergie (22) est mise en oeuvre en fonction de, et en interaction avec, l'au moins un générateur d'énergie et/ou avec l'au moins un consommateur d'énergie lors de la fourniture de puissance de régulation pour un réseau électrique (24).

20. Procédé selon l'une des revendications précédentes, **caractérisé en ce**
**qu'**une tolérance concernant l'écart de fréquence par rapport à la fréquence de consigne du réseau électrique (24) est utilisée pour régler l'état de charge de l'accumulateur d'énergie (22) en même temps que la fourniture de la puissance de régulation par l'accumulateur d'énergie (22).

21. Procédé selon l'une des revendications précédentes, **caractérisé en ce que**
la tolérance concernant la quantité de la puissance de régulation fournie est utilisée pour régler l'état de charge de l'accumulateur d'énergie (22) en même temps que la fourniture de la puissance de régulation par l'accumulateur d'énergie (22), la quantité de la puissance de régulation demandée étant, pour l'utilisation de la tolérance concernant la quantité de la puissance de régulation fournie, de préférence dépassée, en particulier au maximum de 30 % et/ou de 10 MW, de façon particulièrement préférée au maximum de 20 % et/ou de 5 MW, le pourcentage de dépassement de la quantité de la puissance de régulation demandée étant de façon particulièrement préférée choisi proportionnellement à l'écart de l'état de charge de l'accumulateur d'énergie (22) par rapport à l'état de charge moyen.

22. Procédé selon l'une des revendications 20 ou 21, **caractérisé en ce que**
l'état de charge de l'accumulateur d'énergie (22) est réglé par le fait que, au cas où l'état de charge de l'accumulateur d'énergie (22) se situe au-dessus d'une première valeur limite, l'accumulateur d'énergie (22) injecte dans le réseau électrique (24) une puissance de régulation plus importante située à l'intérieur de la tolérance ou des tolérances, ou prélève à partir du réseau électrique (24) une puissance de régulation plus faible située à l'intérieur de la tolérance ou des tolérances et/ou au cas où l'état de charge de l'accumulateur d'énergie (22) se situe au-dessous d'une deuxième valeur limite, l'accumulateur d'énergie (22) injecte dans le réseau électrique (24) une puissance de régulation plus faible située à l'intérieur de la tolérance ou des tolérance, ou prélève à partir du réseau électrique (24) une puissance de régulation plus importante située à l'intérieur de la tolérance ou des tolérances.

23. Procédé selon l'une des revendications précédentes, **caractérisé en ce**
**qu'**un gradient de puissance de régulation est choisi en fonction de l'état de charge de l'accumulateur d'énergie (22), en particulier la courbe dans le temps de la quantité de la puissance de régulation étant réglée, et la tolérance de la quantité de la puissance de régulation à fournir étant utilisée au cours du temps.

24. Procédé selon l'une des revendications précédentes, **caractérisé en ce que**,
lors d'une variation de l'écart de fréquence de moins d'une plage d'insensibilité, en particulier de moins de 10 mHz, une puissance de régulation modifiée n'est dispensée que pour régler l'état de charge de l'accumulateur d'énergie (22), en particulier la puissance de régulation modifiée n'est dispensée que si l'état de charge de l'accumulateur d'énergie (22) se charge ou se décharge de ce fait le plus fortement possible en direction de l'état de charge moyen ou le plus faiblement possible en s'éloignant de l'état de charge moyen.

25. Dispositif destiné à la réalisation d'un procédé selon l'une des revendications précédentes, **caractérisé en ce que**
le dispositif (21) comprend au moins un accumulateur d'énergie (22) et une commande (23) pour la commande et/ou la régulation de la puissance de régulation de l'accumulateur d'énergie (22), l'accumulateur d'énergie (22) étant connecté à un réseau électrique (24) de telle sorte que le dispositif peut injecter de l'énergie dans le réseau électrique (24) ou prélever de l'énergie à partir du réseau électrique (24),
le dispositif (21) comprenant un dispositif pour mesurer l'état de charge de l'au moins un accumulateur d'énergie (22) et/ou un dispositif pour mesurer l'écart de fréquence de la fréquence de réseau par rapport à la fréquence de consigne, et comprenant une mémoire de données, au moins une largeur de bande et/ou l'état de charge moyen de l'accumulateur d'énergie (22) étant stocké(e) dans la mémoire de données, la commande (23) ayant accès à la mémoire de données et étant conçue pour commander la puissance de régulation délivrée et prélevée par l'accumulateur d'énergie (22) en fonction de l'état de charge de l'accumulateur d'énergie (22) et/ou de l'écart de fréquence,
l'accumulateur d'énergie (22) étant un accumulateur, de préférence un accumulateur lithium-ion, un accumulateur plomb-acide sulfurique, un accumulateur nickel-cadmium,
un accumulateur sulfure de sodium et/ou un accumulateur Li-ion et/ou un composite d'au moins deux de ces accumulateurs.
